# EUROPEAN PATENT SPECIFICATION

(11) **EP 2 156 420 B1**
(45) Date of publication and mention of the grant of the patent: **13.03.2013**
(21) Application number: 07792324.1
(22) Date of filing: 03.08.2007
(51) Int. Cl.: G08B 17/103, G01S 17/88, G08B 13/183, G08B 13/184, G08B 29/24, F16P 3/14, G01V 8/10

(54) **POSITION SPECIFYING SYSTEM**
POSITIONSSPEZIFIZIERUNGSSYSTEM
SYSTÈME DE SPÉCIFICATION DE POSITION

(30) Priority: 13.06.2007 GB 0711464
(43) Date of publication of application: 24.02.2010
(73) Proprietor: HOCHIKI CORPORATION, Tokyo 141-8660 (JP)
(72) Inventor: PAYN, Howard, Anthony, Gillingham, Kent ME8 0SA (GB); MATSUKUMA, Hidenari, Tokyo 141-8660 (JP)
(74) Representative: HOFFMANN EITLE
(86) International application number: PCT/JP2007/065678
(87) International publication number: WO 2008/152745

(56) References cited:
- GB-A- 2 426 323
- GB-A- 2 426 323
- JP-A- 04 102 997
- JP-A- 05 120 581
- JP-A- 05 334 582
- JP-A- 08 016 950
- JP-A- 10 320 667
- JP-A- 11 154 290
- JP-A- 61 228 597
- JP-A- 61 246 654
- JP-A- 2003 269 915
- JP-A- 2007 011 870

## Description

The present invention relates to a position specifying system that specifies a position of a predetermined object using light, and more particularly relates to a reflective-type beam detector.

GB-A-2 426 323 describes an infra-red beam smoke detection system and methods of installing and maintaining the system. A transmitter LED, and detector photodiode, are mounted in a housing and an electrically-driven actuator effects the angular adjustment of the beam direction to improve beam alignment. Light funnels are positioned between a printed circuit board and lenses. A visible light beam transmitter is arranged selectively to transmit a collimated beam of visible light coaxially with the infra-red beam. A remote interface unit is fixed to a wall surface and is connected to external cables for power and data transfer to and from the transmitters and detectors and has electronic means for controlling the transmitters and detectors remotely to ensure their optical alignment and to determine the presence of smoke. The infra-red beam smoke detection apparatus also comprises a base unit and head unit to assist in installing the system in an enclosed space.

JP-A-61246654 describes an automatic optical axis adjustor for photoelectric type sensor. To automate the optical axis matching, the optical axis is set in the direction in which the maximum quantity of light received is detected by turning the optical axis vertically and horizontally by steps. A projector and a photo detector are arranged as opposed to each other and an optical axis adjusting program is executed to send a step signal to servo motors of the projector from a motor control circuit incorporated into the body of the photo detector so that the optical axis of the projector is scanned in two axes to memorize received light signals in respective directions into a memory. The optical axis is set in the direction in which the maximum quantity of light received is detected thereby enabling automation of the optical axis matching.

Conventionally, when various devices are placed according to a direction of a predetermined object, the position of the predetermined object is identified using a sighting device or the like, and based on the identified position, positioning is performed manually.

For example, a reflective-type beam detector that is used to detect smoke generated due to a fire is used by arranging a light transmitter/receiver that transmits and receives an Infrared ray beam and a reflector that reflects the infrared ray beam that has been transmitted from the light transmitter/receiver arranged so as to be opposed to each other on a wall. When smoke is present on a route in which the infrared ray beam is transmitted by the light transmitter/receiver, reflected by the reflector, and received by a light receiving unit In the light transmitter/receiver, light intensity at the light receiving unit decreases. Based on this decrease, occurrence of a fire is detected.

In such a reflective-type beam detector, it is required that the infrared ray beam that has bean transmitted by a light transmitting unit in the light transmitter/receiver be certainly received by the light receiving unit in the light transmitter/receiver. Particularly in large scale establishments, such as factories, in which the reflective-type beam detector is often installed, highly accurate installation work is required so that the light beam is accurately irradiated to the reflector from the light transmitter/receiver because a distance between the light transmitter/receiver and the reflector is large. In addition, the light transmitter/receiver and the reflector are often placed at high places, and the highly accurate installation work and the sight adjusting work described above are required to be performed at high places.

To ease requirements for strict accuracy in such installation works, a reflector of retroreflective-type (retroreflective plate) is used. The reflector has a property of reflecting incident light in a substantially incident direction (retroreflection). Therefore, when the light beam is transmitted from the light transmitting unit in the light transmitter/receiver to the reflector, the light beam is reflected toward the light transmitter/receiver regardless of an incident angle, and reaches the light receiving unit arranged near the light transmitting unit. A range of the incident angle (inclination angle relative to a normal of the reflector) that allows the retroreflection by the reflector is large, and if the incident angle is within a range of about 10 degrees, it is possible to keep a light amount of the beam required for the reflective-type beam detector to perform fire determination based on the reflected light from the reflector.

As described above, since the requirement for installation accuracy to the reflector is eased with the use of the reflector, fine adjustment of a position and an angle at the time of installation of the reflective-type beam detector is performed only for the light transmitter/receiver. Specifically, a position of the reflector is accurately specified based on the light transmitter/receiver so that the infrared ray beam transmitted from the light transmitting unit of the light transmitter/receiver is certainly be irradiated to the reflector, and based on this position, an installation position and an installation angle of the light transmitter/receiver are required to be accurately adjusted. Further, in order to maintain a permissible range for shifting of an installation direction of the installation position after installation, it is required to position the reflector at the center of an irradiation image of the light beam.

When installation adjustment of the light transmitter/receiver is actually performed, first, while visually checking the reflector using a sighting device provided in the light transmitter/receiver, an installation angle and a beam emitting angle of the light transmitter/receiver are set such that the reflector is positioned at the center of sight. Thus, the reflector can be placed within an irradiation range of the beam transmitted from the light transmitter/receiver.

Moreover, the beam transmitted from the light transmitter/receiver has a mountain shape having gentle slopes of intensity distribution in which the peak appears near the center of the irradiation image. Therefore, when the reflector is positioned near the center of the irradiation image, the peak appears in the reception light intensity at the light transmitter/receiver. Using this property, the peak of the reception light intensity at the light transmitter/receiver is searched, and the reflector is arranged to be positioned at the center of the irradiation image of the beam. When the peak of the reception light is searched, while transmitting the beam from the light transmitter/receiver so as to be irradiated to the reflector, and measuring the reception light intensity at the light transmitter/receiver of the light reflected by the reflector, the installation angle of the light transmitter/receiver is adjusted manually or by a motor or the like. If the smoke detector cannot operate normally because the installation angle is shifted during operation, the above adjustment needs to be performed again.

After the installation adjustment of the light transmitter/receiver is performed as described above, the reception light intensity at the light transmitter/receiver is obtained as an initial reception light intensity. When occurrence of a fire is determined by the reflective-type beam detector, presence of smoke in a monitoring range is detected based on a ratio between the initial reception light intensity and reception light intensity at the time of monitoring, thereby determining as a fire.

After the reflective-type beam detector is started to be operated, the reception light intensity at the light receiving unit of the light transmitter/receiver sometimes decreases slowly due to shift of a beam axis and the like caused by contamination on a light transmission/reception surface or a warp on the installation surface. Therefore, if decrease in the reception light intensity advances with time, when the reception light intensity decreases to a threshold at which it is determined as a fire, it can be determined as a fire even when no fire has occurred. If the reception light intensity decreases to a vicinity of the threshold, even with so small amount of smoke that it is not usually determined as a fire, it can be determined as occurrence of a fire, and detection sensitivity can be changed.

In the conventional reflective-type beam detector, a change of the reception light intensity as described above is handled by internally adjusting a value referred as the initial reception light intensity or the threshold for the fire determination. For example, when cumulative slow decrease in the reception light intensity is detected, internal correction is applied to a current reception light intensity, a value of the initial reception light intensity to be the reference of the fire determination is corrected to a smaller value, or a level of the threshold for the fire determination is lowered, corresponding to an amount of the detected cumulative decrease, or at a predetermined rate. Thus, the detection sensitivity in the fire determination is maintained at a certain level. However, since factors of the change of the reception light intensity also include intervention of smoke, the internal correction should be performed only with respect to the slow change of the reception light intensity, not to be performed with respect to a change due to this factor. Moreover, if such internal correction is accumulated, the SN ratio of the reception light intensity used for a fire determination process in the smoke detector is degraded, to make the operation unstable. Therefore, there is a case where a limit signal that indicates the limit of the internal correction is output when a cumulative value of the internal correction exceeds a predetermined value. When the limit signal is output, cleaning of the light transmission/reception surface or readjustment of the installation angle and the like are performed.

Furthermore, if the reflector is not positioned near the center of the irradiation image of the beam at the time of the installation adjustment of the light transmitter/receiver, and if the light transmitter/receiver is shifted in such a direction that the reflector approaches the center of the irradiation image of the beam during operation, the reception light intensity slowly increases. Similarly, in another case where sunlight gradually enters the light receiving unit, the reception light intensity slowly increases. When the reception light intensity thus increases, internal correction similar to the correction performed when the reception light intensity decreases is performed.

On the other hand, when a drastic change is detected that exceeds the change in the reception light intensity at the time of occurrence of a fire, it is determined that problems other than a fire (for example, intervention of an object shielding the light, intervention of strong disturbance light in a short time, drastic shift of the optical axis, etc.) have occurred, and a fault signal is output.
Furthermore, a technique of remote controlling positioning of a light transmitter and a light receiver with a remote control in a separate-type beam detector in which a reflector is not used but the light transmitter and the light receiver are arranged to be opposed to each other has been proposed (for example, Japanese Patent Application Laid-open No. H8-62135). In this technique, the light transmitter and the light receiver are respectively placed on position-controllable electric turntables that is equipped with a laser, and positioning of the a separate-type beam detector is performed by operating the electric turntables with a remote control such that a laser beam that has emitted from the laser on one of the electric turntables is irradiated to a target arranged on the other one of the electric turntables.
It is an object of the present invention to address at least some of the problems in the conventional technology.
According to a first aspect of the present invention, there is provided a reception-light intensity processing system comprising: a light emitting unit operable to emit reference light; a light transmitting unit operable to transmit signal light, a light receiving unit operable to receive the reference light emitted from the light emitting unit and the signal light transmitted from the light transmitting unit; a reference light controller operable to change a transmission direction of the reference light; and a reception-light intensity processing unit operable to perform a predetermined process based on a change in reception light intensity of the reference light at the light receiving unit when the transmission direction of the reference light is changed by the reference light controller, characterized in that: the reception-light intensity processing unit includes: a position specifying unit operable to specify a position of the light receiving unit, based on the change in the reception light intensity of the reference light at the light receiving unit; and an abnormal condition determining unit operable to perform calculation of a predetermined value based on the position of the light receiving unit specified by the position specifying unit, and to perform the abnormal condition determination based on the result of the calculation.
According to a second aspect of the present invention, there is provided a reception-light intensity processing system comprising: a light emitting unit operable to emit reference light; a light transmitting unit operable to transmit signal light, a light receiving unit operable to receive the reference light emitted from the light emitting unit and the signal light transmitted from the light transmitting unit; a reference light controller operable to change a transmission direction of the reference light; and a reception-light intensity processing unit operable to perform a predetermined process based on a change in reception light intensity of the reference light at the light receiving unit when the transmission direction of the reference light is changed by the reference light controller, characterized in that: the reception-light intensity processing unit includes a position specifying unit operable to specify a position of a reflector operable to reflect the reference light emitted from the light emitting unit to the light receiving unit and operable to reflect the signal light transmitted from the light transmitting unit to the light receiving unit, based on the change in the reception light intensity of the reference light at the light receiving unit; and an abnormal condition determining unit operable to perform calculation of a predetermined value based on the position of the reflector specified by the position specifying unit, and to perform the abnormal condition determination based on the result of the calculation.
For a better understanding of the invention and to show how the same may be carried into effect, reference will now be made, by way of example, to the accompanying drawings, in which:
Fig. 1 is a perspective view of a reflective-type beam detector according to a first embodiment of the present invention;
Fig. 2 is a block diagram schematically showing a function of an electrical configuration of a detector main unit;
Fig. 3 is a plan view showing a field of a sighting device at the time of installing the detector main unit;
Figs. 4 show a relationship between a scanning position of reference light and a change in reception light intensity; where Fig. 4A is a diagram showing a scanning area that is scanned by the reference light, and Fig. 4B is a graph showing a change in the reception light intensity of the reference light at a light receiving unit;
Figs. 5 show a relationship between the scanning position of the reference light and a change in the reception light intensity; where Fig. 5A is a diagram showing the scanning area that is scanned by the reference light, and Fig. 5B is a graph showing a change in the reception light intensity of the reference light at the light receiving unit;
Fig. 6 is a flowchart of a process of specifying a position of a reflector;
Fig. 7 is a flowchart of a position specifying process performed by a position specifying unit;
Fig. 8 is a flowchart of a reception-light intensity correction process performed by a fire determining unit;
Fig. 9 is a diagram showing diffusion of signal light transmitted from a light transmitting unit and an intensity distribution in an irradiation image of the signal light;
Fig. 10 is a block diagram schematically showing a function of an electrical configuration of a reflective-type beam detector according to a second embodiment of the present invention;
Figs. 11 show a change in the reception light Intensity when a proximity of the reflector is scanned by signal reference light where Fig. 11A is a diagram showing a scanning area that is scanned by the signal reference light, and Fig. 11B is a graph showing a change in the reception light intensity of the signal reference light at the light receiving unit; and
Fig. 12 is a flowchart of a process regarding the fire determination of the reflector after the reflective-type beam detector is installed.
Exemplary embodiments of a position specifying system according to the present Invention will be explained below in detail with reference to the accompanying drawings. In the embodiments, [I] Basic concept common to each embodiment is explained first, [II] Details of each embodiment is explained next, [III] Modification of each embodiment is finally explained, and [IV] Technical Effect of the Embodiments. Note that the present invention is not limited to the embodiments.

### [I] Basic Concept Common to Each Embodiment

First, a basic concept common to each embodiment is explained. In the example of the beam detector described above, a permissible range for shift of the optical axis of the light transmitter/receiver after the start of operations is secured ___________ to some extent by improving the installation accuracy at the time of installing the light transmitter/receiver and the reflector. Moreover, after the start of operations, an improper operation of the smoke detector is prevented by performing the internal correction with respect to the change of the reception light intensity at the light receiving unit of the light transmitter/receiver that is assumed to be caused by factors other than intervention of smoke of a fire.

However, the internal correction described above is such an internal correction that is collectively performed on the initial reception light intensity and the threshold for the fire determination with respect to the change of the reception light intensity that is caused by combinations of various factors, and for example, different correction cannot be performed distinguishing between the change of the reception light intensity due to shift of the beam axis and the change due to contamination on the light transmission/reception surface. In other words, separate correction for each change factor of the reception light intensity after the start of operations cannot be performed.

Moreover, even if correction of the factor itself of the change in the reception light intensity is to be performed, there has been no effective means for identifying how much influence each change factor has. Therefore, it is difficult to perform effective correction. In other words, since the influence of shift of the beam axis, contamination on the light transmission/reception surface, intervention of smoke due to a fire, or a combination of these can only be detected from the change in the reception light intensity at the light transmitter/receiver, it is impossible to detect, for example, the direction and the degree of the shift of the beam axis distinguishing from other disturbance factors, and naturally, it is also impossible to perform correction of the beam axis in parallel with fire monitoring during normal operations.

Further, because only the collective internal correction is performed with respect to the reception light intensity caused by combinations of multiple factors, even if a change of the reception light intensity caused by each of individual factors is small, when the cumulative value of the internal correction corresponding to such function exceeds a predetermined value, it reaches the correction limit. When the correction limit is thus reached, due to what factor the internal correction is required is not identified, and therefore, the smoke detector cannot be restored unless it is investigated separately what has been the cause of the change, shift of the beam axis, contamination on the light transmission/reception surface, another factor, or a combination of these. For example, when the reflector is out of an effective irradiation range of the beam transmitted from the light transmitter/receiver due to a warp on the installation surface or the like, the correction limit is reached even if contamination on the light transmission/reception surface is not serious. However, for restoration, investigation on contamination on the light transmission/reception surface or cleaning is also necessary, and a high-place work is required. In another case, even though the influence of shift of the optical axis on the reception light intensity is not serious actually, a complicated optical axis adjusting work is necessary. Thus, frequency of maintenance increases, and the maintenance takes a lot of trouble.

Furthermore, also when the installation angle adjustment is performed at the time of installation of the light transmitter/receiver and the reflector, similarly to the above case, the degree and the direction of shift of the beam axis cannot be detected. Therefore, it is required to repeat the peak search of the reception light intensity from the beginning, thereby taking a long time for the adjusting work. When the adjusting work is performed by human, time required for specifying the position of the reflector and accuracy in specifying the position depend on skill of workers. Therefore, there is a possibility that work time increases or accuracy in specifying the position decreases. When the adjusting work is performed by controlling a motor also, the degree and the direction of shift of the beam axis cannot be detected. Therefore, it is required to repeat the peak search of the reception light intensity from the beginning.

The followings embodiments have been achieved in view of the above problems, and it is a main object of the present embodiment to provide a reception-light intensity processing system that can perform an installation position specifying process of a specific device, a fire determination process, and the like easily and accurately.

Moreover, it is a second object of the embodiments to provide a beam detector that can specify an installation position of a reflector relative to a light transmitter/receiver easily and accurately, and that can detect a change of the installation position of the reflector.

Furthermore, it is a third object of the embodiments to provide a beam detector that effectively identifies a cause of a change in the reception light intensity, and that performs separate correction for each cause, thereby extending a period until the correction limit is reached and improving service performance.

An installation object in the reception-light intensity processing system according to each embodiment is arbitrary, and for example, in a reflective-type beam detector, it can be installed in a large-scale building such as a factory and a warehouse as a reception-light intensity processing system that specifies a position of a reflector relative to a light transmitter/receiver and that performs a fire determination process.

A feature of the reception-light intensity processing system according to each embodiment generally is that a reference light controller transmits light emitted from a light emitting unit to an area including the target device, a position of which is to be specified, while changing a transmission direction, and a position of the target device relative to the light emitting unit is specified based on a change in the intensity of reference light reflected from the device (for example, the reflector of the reflective-type beam detector) or in the intensity of reference light directly received by the device (for example, the light receiving unit of the reflective-type beam detector). Thus, a position of a predetermined device can be specified easily and accurately without requiring a manual operation by an operator.

Furthermore, a different feature of the reception-light intensity processing system according to each embodiment generally is that process data (for example, reception light intensity data used in the fire determination in the beam detector) that is used in the reception-light intensity processing system is calculated based on the position information of the target device specified as described above. By using the calculated process data, it is possible to improve accuracy in a process performed in the reception-light intensity processing system and to increase a permissible range to disturbance.

### [II] Details of Each Embodiment

Details of each embodiment according to the present embodiments are explained next. In the following explanation, an example is given with a beam detector as a device to which the reception-light intensity processing system of the present embodiment is applied.

### [First Embodiment]

A first embodiment of the present invention is explained first. In the first embodiment, a position of the reflector of the reflective-type beam detector is specified, calculation is performed on the reception light intensity or the like based on the specified position of the reflector, and abnormal condition determination is performed based on a result of the calculation.

Configuration of Reflective-type Beam Detector:

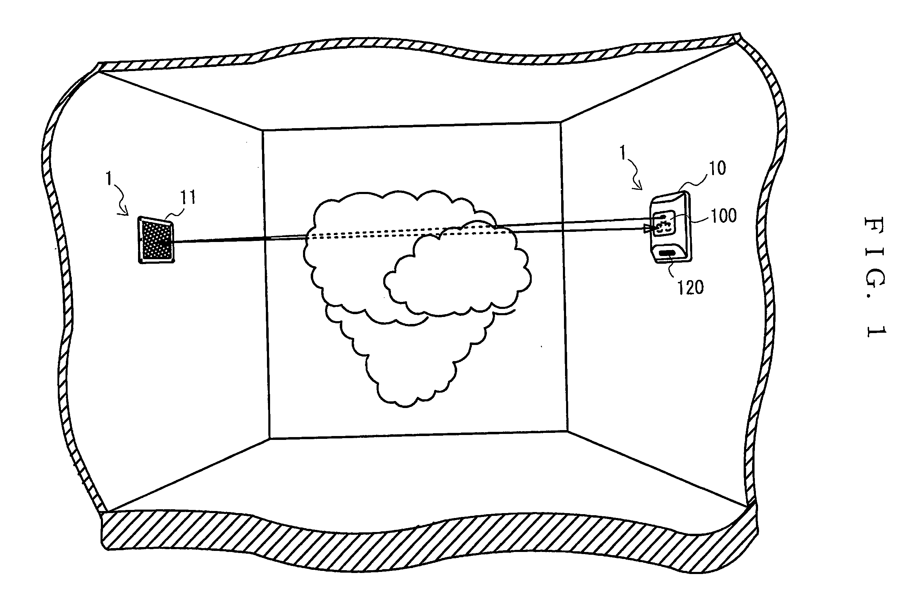

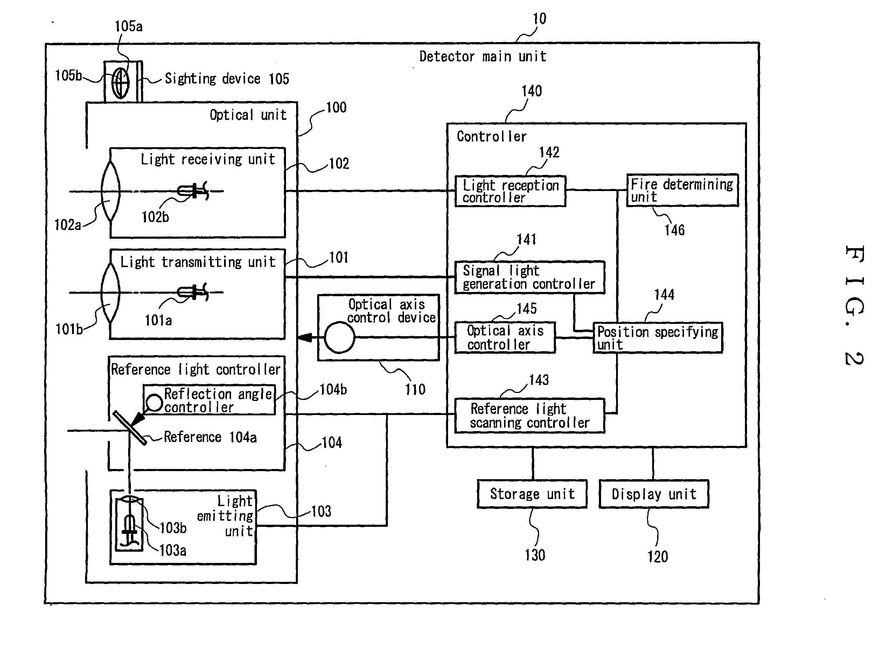

A configuration of a reflective-type beam detector according to the first embodiment is explained first. Fig. 1 is a perspective view of the reflective-type beam detector according to the first embodiment, and Fig. 2 is a block diagram schematically showing a function of an electrical configuration of a detector main unit.

As shown in Figs. 1 and 2, a reflective-type beam detector 1 includes a detector main unit 10 and a reflector 11. The detector main unit 10 and the reflector 11 are arranged to be opposed to each other in a target area of monitoring generation of smoke. The detector main unit 10 includes an optical unit 100, an optical axis control device 110, a display unit 120, a storage unit 130, and a controller 140.

The optical unit 100 is a part where optical devices used to detect smoke and to specify a position of the reflector 11 are mounted in the reflective-type beam detector and is connected to the detector main unit 10 through the optical axis control device 110. The optical unit 100 includes a light transmitting unit 101, a light receiving unit 102, a light emitting unit 103, a reference light controller 104, and a sighting device 105.

The light transmitting unit 101 transmits signal light that is used to detect smoke to the reflector 11, and corresponds to a light transmitting unit in the appended claims. A specific configuration of the light transmitting unit 101, wavelength of light transmitted by the light transmitting unit 101, and the like are arbitrary, and for example, it can be configured such that an LED 101a (Light Emitting Diode) that emits an infrared ray is used as a light source, and the light emitted by the LED 101a is concentrated with a lens 101b to be transmitted. Alternatively, it can be configured such that a laser diode or the like is used to transmit a laser beam.

The light receiving unit 102 receives the signal light or the reference light that is reflected from the reflector 11, and corresponds to a light receiving unit in the claims. A specific configuration of the light receiving unit 102 is arbitrary, and for example, it can be configured to include a lens 102a that concentrates the signal light or the reference light entering the light receiving unit 102, and a light receiving device 102b that converts the signal light or the reference signal concentrated by the lens 102a into an electrical signal.

The light emitting unit 103 emits the reference light that is used to specify a position of the reflector 11, and corresponds to a light emitting unit in the claims. A specific configuration of the light emitting unit 103 is arbitrary, and for example, it can be configured to include an LED 103a and a lens 103b, or a laser diode or the like, similarly to the light transmitting unit 101.

The reference light controller 104 changes a direction in which the reference light from the light emitting unit 103 is transmitted, and corresponds to a reference light controller in the claims. The reference light controller 104 includes a turnable reflector 104a that reflects the reference light from the light emitting unit 103, and a reflection angle controller 104b that controls an angle of the turnable reflector 104a. The reflection angle controller 104b corresponds to a reflection angle controller in the claims. Specific configurations of the turnable reflector 104a and the reflection angle controller 104b are arbitrary, but it is preferable that the turnable reflector 104a is at least biaxially rotatable by the reflection angle controller 104b. As the turnable reflector 104a and the reflection angle controller 104b that enable such movement, a micromirror device can be used in which a micromirror formed on a semiconductor integrated circuit is driven by the semiconductor integrated circuit. Specifically, a micromirror can be used as the turnable reflector 104a, and the semiconductor integrated circuit can be used as the reflection angle controller 104b. Alternatively, the turnable reflector 104a can be configured with a specular body, and the turnable reflector 104a can be rotated using the reflection angle controller 104b having a motor and gears.

The sighting device 105 is used to determine an installation direction of the detector main unit 10 so that the reflector 11 is positioned within a range of a scanning area scanned by the reference light, at the time of installing the detector main unit 10. A specific configuration of the sighting device 105 is arbitrary, and for example, it can be configured such that a sighting hole 105a having a similar shape to a shape of the scanning area of the reference light is provided on the optical unit 100, and a cross line 105b indicating the center of the scanning area is provided inside the sighting hole 105a. Particularly, by setting a diameter of the sighting hole 105a so that a view angle (angle between a view point of an operator and an inner circumference of the sighting hole 105a) of the sighting device 105 and a scanning angle of the reference light by the reference light controller 104 coincide with each other, a field of view when the sighting device 105 is used almost coincides with the scanning area of the reference light. Therefore, it is possible to easily install the detector main unit 10 such that the reflector 11 is positioned within the range of the scanning area.

The light transmitting unit 101, the light receiving unit 102, the light emitting unit 103, and the sighting device 105 described above are fixed adjacent to each other on the optical unit 100. The light transmitting unit 101 and the light receiving unit 102 are arranged such that a light transmission direction and a light receiving direction coincide with each other.

The optical axis control device 110 controls an installation angle of the optical unit 100 with respect to the detector main unit 10, and corresponds to an optical axis controller in the claims. A specific configuration of the optical axis control device 110 is arbitrary, and for example, an angle adjusting mechanism can be used in which a plurality of motors and gears are combined so as to be able to rotate the optical unit 100 biaxially.

The display unit 120 displays an operating state (for example, in monitoring state, in fault state, in fire state, etc.) of the reflective-type beam detector 1 and is controlled by the controller 140. A specific configuration of the display unit 120 is arbitrary, and a plurality of LEDs that emit light in colors corresponding to respective states (for example, in monitoring state: green, in fault state: yellow, in fire state: red) can be used, or a liquid crystal display device can be used to display characters. Moreover, as the above operating state, a light emitting amount of the light transmitting unit 101, a light reception amount of the light receiving unit 102, a light emitting amount of the light emitting unit 103, a control angle by the reference light controller 104, a control angle by the optical axis control device 110, or various kinds of guidance can be displayed.

The storage unit 130 stores information used for processes in the reflective-type beam detector 1, for example, a history of the reception light intensity at the light receiving unit 102, a history of internal correction, and the like.

The controller 140 performs a predetermined processing in the reflective-type beam detector 1, and corresponds to a reception-light intensity processing unit in the claims. As shown in Fig. 2, the controller 140 includes a signal light generation controller 141, a light reception controller 142, a reference light scanning controller 143, a position specifying unit 144, an optical axis controller 145, and a fire determining unit 146.

The signal light generation controller 141 controls the light transmitting unit 101, and specifically, controls driving timing and a driving current of a light source such as the LED 101a in the light transmitting unit 101.

The light reception controller 142 controls the light receiving unit 102, and specifically, controls timing at which the light receiving device 102b in the light receiving unit 102 is caused to receive light, or to perform sampling of received signal light, and performs a process of the electrical signal converted by the light receiving device 102b and the like.

The reference light scanning controller 143 controls the light emitting unit 103 and the reference light controller 104. Specifically, the reference light scanning controller 143 controls driving timing of a light source such as the LED 103a of the light emitting unit 103, and an angle by which the transmission direction of the reference light is changed by the reference light controller 104.

The position specifying unit 144 specifies a position of the reflector 11 relative to the light transmitting unit 101 based on a change in the reception light intensity of the reference light at the light receiving unit 102 when the transmission direction of the reference light emitted by the light emitting unit 103 is changed by the reference light controller 104, and corresponds to a position specifying unit in the claims. Details of the position specification of the reflector 11 by the position specifying unit 144 are described later.

The optical axis controller 145 controls the optical axis control device 110 to position the optical unit 100 in a predetermined direction, based on position information of the reflector 11 input by the position specifying unit 144.

The fire determining unit 146 performs determination regarding a fire and the like based on a signal input, through the light reception controller 142, by the light receiving unit 102 that has received the signal light, and corresponds to an abnormal condition determining unit in the claims. Moreover, the fire determining unit 146 performs calculation on a value that is referred to when performing the determination regarding a fire and the like, based on the position information of the reflector 11 specified by the position specifying unit 144, and performs a predetermined process based on a result of the calculation. Details of the calculation and the processes such as the determination are described later.

A specific configuration of the controller 140 is arbitrary, and for example, it is configured with programs in which procedures of various processes are defined, an internal memory to store predetermined data, and a CPU (Central Processing Unit) that executes the programs.

The reflector 11 is to reflect the signal light that is transmitted from the light transmitting unit 101 or the reference light that is transmitted from the light emitting unit 103, and is arranged to be opposed to the light transmission direction of the signal light, and further, the reflector 11 is arranged such that a surface of the reflector 11 is substantially perpendicular to the light transmission direction. A specific configuration of the reflector 11 is arbitrary, but it is preferable to use a retroreflective plate that reflects incident light back in the Incident direction. With this configuration, when the signal light or the reference light is irradiated to the reflector 11 from the optical unit 100, the signal light or the reference light is certainly reflected toward the optical unit 100, and it becomes possible to receive the reflected light by the light receiving unit 102 arranged near the light transmitting unit 101, the light emitting unit 103, and the reference light controller 104.

### Operation of Reflective-type Beam Detector:

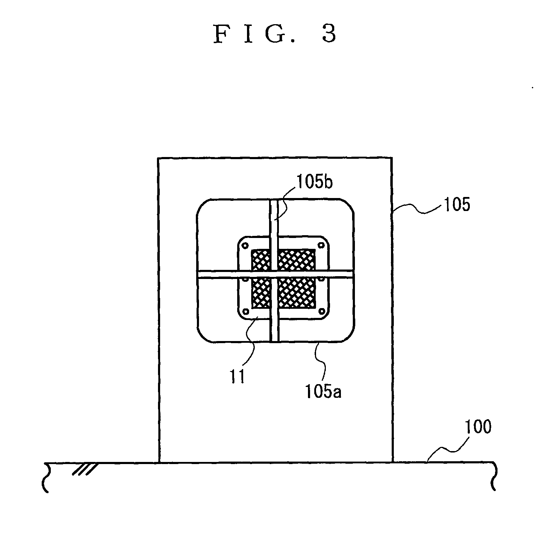

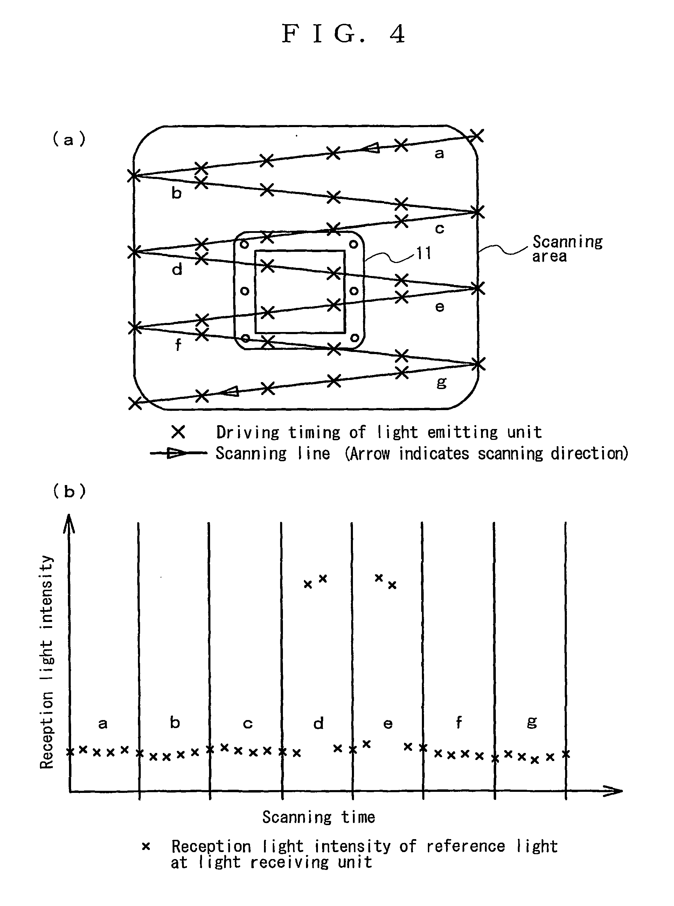

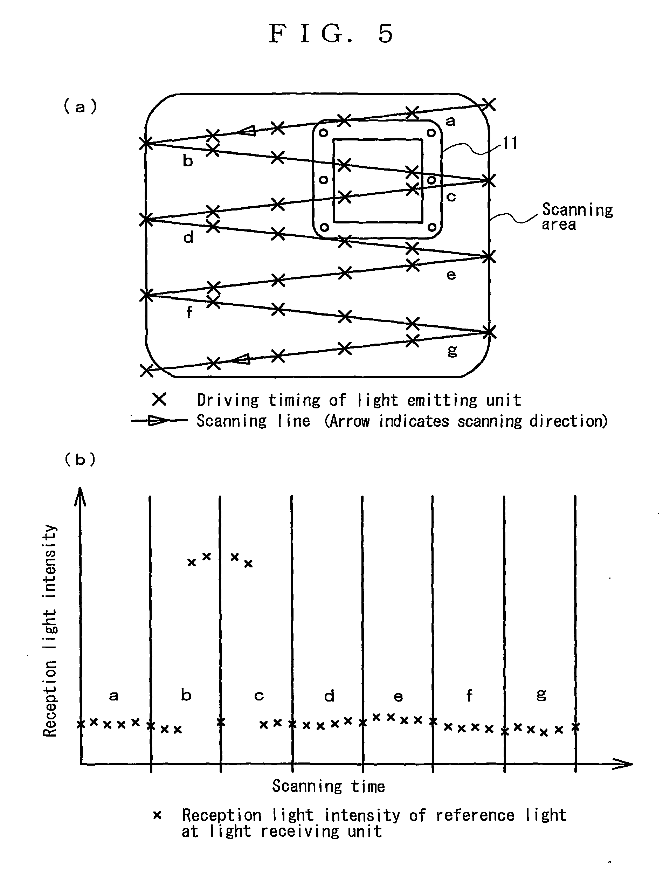

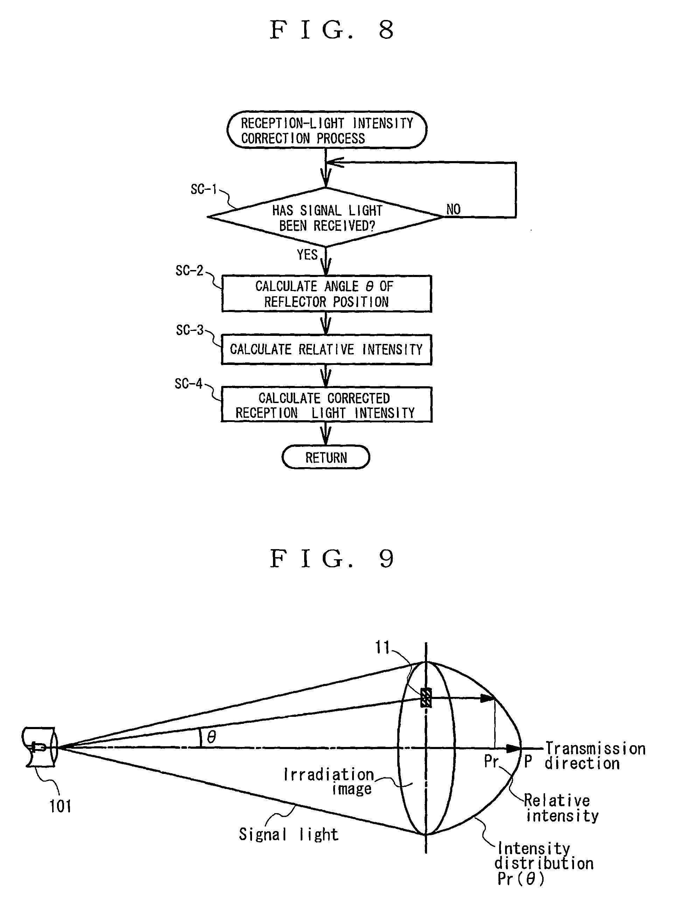

Position specification of the reflector 11 by scanning with the reference light performed by the reflective-type beam detector 1 is explained next. Fig. 3 is a plan view showing a field of view of the sighting device 105 when the detector main unit 10 is installed. Figs. 4 and 5 are diagrams showing a relationship between a scanning position of the reference light and a change in reception light intensity; Figs. 4A and 5A are diagrams showing a scanning area that is scanned by the reference light, and Figs. 4B and 5B are graphs showing a change in the reception light intensity of the reference light at the light receiving unit 102. In Figs. 4A and 5A, arrows indicate the scanning direction, and x marks indicate timing at which the light emitting unit 103 is driven and at which the reference light received by the light receiving unit 102 is sampled. In Figs. 4B and 5B, a horizontal axis represents passage of time with scanning with the reference light, and a vertical axis represents the reception light intensity at the light receiving unit 102. It should be noted that the graph shown In Figs. 4B, 5B and 11B (explained later) is illustrated as an example, and the shape of those graphs may be actually more gentle when a beam emitted from the light emitting unit 103 has a gentle-shaped intensity distribution as shown in Fig. 9 (explained later).

At the time of installation of the detector main unit 10, the installation direction of the detector main unit 10 is determined using the sighting device such that the reflector 11 is present within a scanning area of the reference light. Specifically, as shown in Fig. 3, the installation direction is adjusted so that the entire reflector 11 is viewed through the sighting hole 105a. At this time, it is not necessary to adjust precisely to position the reflector 11 at the center of the sighting hole 105a.

When the detector main unit 10 is installed in an appropriate direction as described above, the entire reflector 11 is included in the scanning area of the reference light. In this case, as shown in Figs. 4 and 5, the transmission direction of the reference light transmitted from the light emitting unit 103 is controlled by the reference light controller 104, and is irradiated so as to scan inside the scanning area. A direction and an order of scanning inside the scanning area is arbitrary, and for example, as shown in Figs. 4A and 5A, the reference light can be scanned along a scanning line that two-dimensionally passes and returns obliquely. Alternatively, the reference light can be irradiated in one direction along a plurality of parallel scanning lines that one-dimensionally cross inside the scanning area. When such one-dimensional scanning is performed, for example, one scanning is performed by irradiating the reference light along a horizontal scanning line while rotating the turnable reflector 104a by the reflection angle controller 104b, and then, the optical unit 100 is turned in a vertical direction for a predetermined amount by the optical axis control device 110, to perform scanning in a horizontal direction again. By repeating such an operation, it is possible to scan inside a predetermined scanning area. In this case, the turnable reflector 104a is required to be rotated uniaxially by the reflection angle controller 104b.

When the transmission direction of the reference light is controlled to perform the one-dimensional or two-dimensional scanning as described above, the transmission direction of the reference light transmitted from the light emitting unit 103 can also be controlled without using the reference light controller, but by rotating the optical unit 100 by the optical axis control device 110.

As for intervals between respective scanning lines along which the reference light is irradiated, it is preferable to be equal to or less than one half of a dimension of the reflector 11 in a direction substantially perpendicular to the scanning lines. Thus, at least two scanning lines cross on the reflector 11, and it is possible to further accurately specify the position of the reflector 11.

When the reference light is irradiated along the scanning line as described above, by synchronizing timing at which the transmission direction is switched by the reference light scanning controller 143 and timing at which a light source such as the LED 103a and a laser diode is driven, the reference light can be irradiated intermittently on the scanning line as shown in Figs. 4 and 5. Alternatively, the reference light can be irradiated on the scanning line continuously. Moreover, by causing the light reception controller 142 to perform sampling of the reference light received by the light receiving unit 102 or the like in synchronization with the switching timing of the transmission direction and the driving timing of the light source, the positions on which the reference light is irradiated inside the scanning area and the reception light intensity at that time are processed associating with each other.

Moreover, by sectioning the scanning area into blocks in a grid, the reference light can be spot-irradiated on each block. In this case, the reference light is irradiated intermittently with respect to each block.

When the reference light is irradiated intermittently along the scanning lines that pass obliquely as shown in Figs. 4A and 5A, for example, the reference light is irradiated along scanning lines a to g. When the reflector 11 is arranged at a position shown in Fig. 4A, the reflector 11 is not present in areas corresponding to the scanning lines a to c, and the scanning lines f to g. Therefore, the reception light intensity is low as shown in Fig. 4B. On the other hand, on the scanning lines d and e, the reflector 11 is present. Therefore, the peak of the reception light intensity appears at timing at which the reference light is irradiated on the reflector 11.

Furthermore, when the installation direction of the optical unit 100 is shifted due to a warp on the installation surface on which the detector main unit 10 is installed or the like, to change the position of the reflector 11 in the scanning area of the reference light to a position shown in Fig. 5A, the reflector 11 is positioned on the scanning lines in a range of the scanning lines b and c. Therefore, the peak of the reception light intensity appears corresponding to this timing. As described above, since timing at which the peak of the reception light intensity appears varies depending on a position of the reflector 11 in the scanning area, it is possible to specify the position of the reflector 11 based on the transmission direction when the peak of the reception light intensity appears. Specifically, among transmission directions of the reference light controlled by the reference light controller 104, a direction that coincides with the transmission direction of the signal light transmitted from the light transmitting unit 101 is set as a reference direction in the reference light controller 104. Thus, the transmission direction when the peak of the reception light intensity appears can be specified as angle information based on the reference direction. Moreover, by calculating an average value of angles of the transmission directions of a plurality of points at which the peak of the reception light intensity appears, angle information of the proximity of the center of the reflector 11 can be specified.

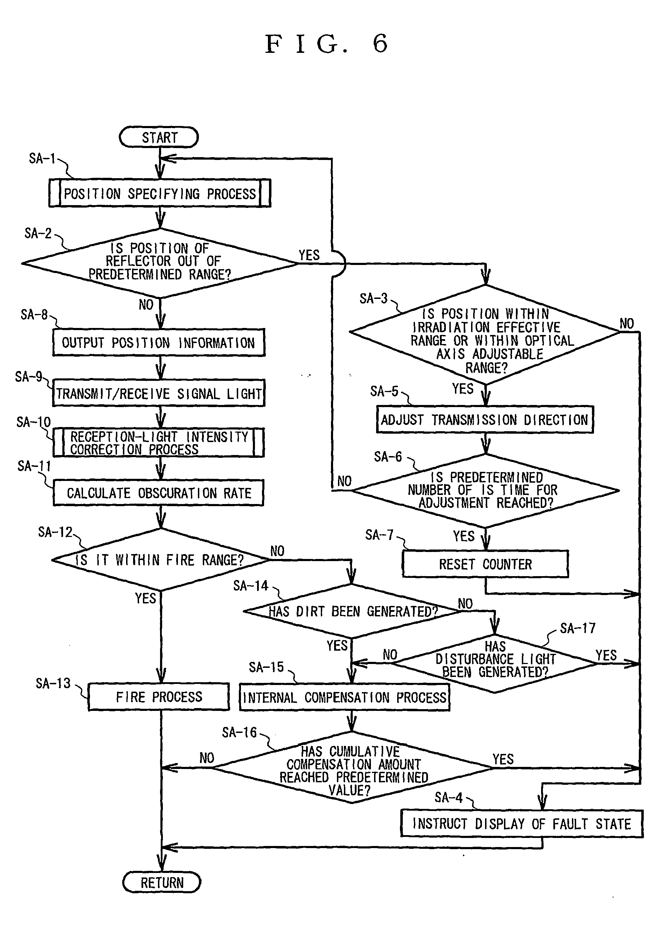

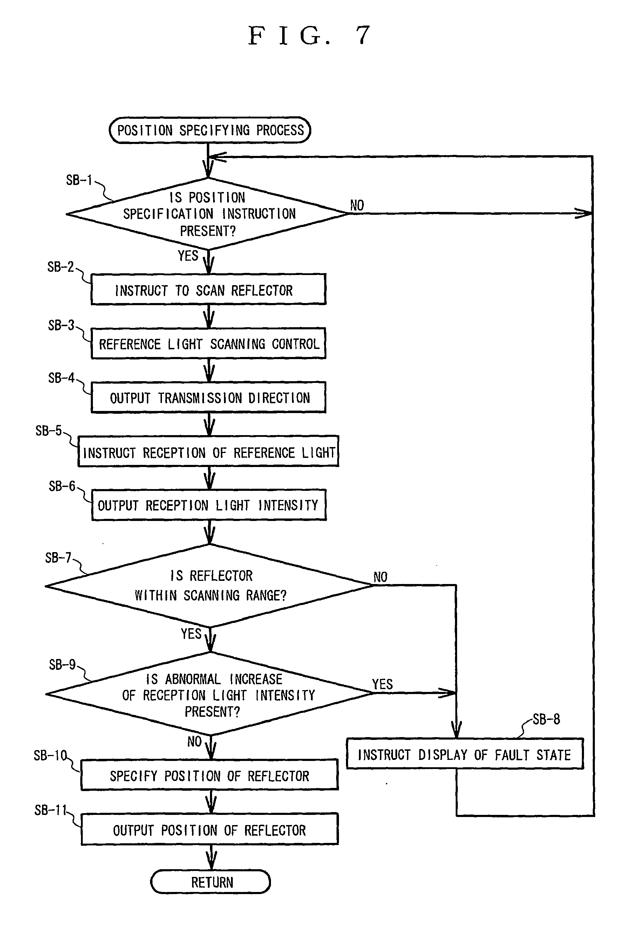

A flow of a process when the position specification of the reflector 11 and an abnormal condition determining process are performed in the reflective-type beam detector 1 according to the first embodiment is explained next. Fig. 6 is a flowchart of a process regarding the position specification of the reflector 11 and the abnormal condition determination, Fig. 7 is a flowchart of a position specifying process performed by the position specifying unit 144, and Fig. 8 is a flowchart of a reception-light intensity correction process performed by the fire determining unit 146.

As a precondition to perform the position specification of the reflector 11 and the abnormal condition determining process, the reception light intensity at the light receiving unit 102 at the time when the transmission direction of the signal light is matched with the proximity of the center of the reflector 11 by optical axis adjustment performed when the detector main unit 10 and the reflector 11 are installed is stored in the storage unit 130 as reception light intensity (hereinafter, "reference value") to be a reference for the abnormal condition determining process.

As shown in Fig. 6, first, the position specifying process of the reflector 11 is performed by the position specifying unit 144 (step SA-1). Details of the position specifying process are explained with reference to Fig. 7.

As shown in Fig. 7, an instruction for the position specification of the reflector 11 is input to the position specifying unit 144 by a predetermined means such as an operation by an operator and start by a timer (not shown) (step SB-1, Yes). Based on the input instruction, the position specifying unit 144 instructs scanning of the reflector 11 with the reference light to the reference light scanning controller 143 (step SB-2).

Based on the instruction input by the position specifying unit 144, the reference light scanning controller 143 causes the light emitting unit 103 to transmit light and controls the reference light controller 104, thereby scanning while changing the transmission direction of the reference light transmitted from the light emitting unit 103 (step SB-3). At the same time, the reference light scanning controller 143 outputs the transmission direction of the reference light being transmitted, to the position specifying unit 144 (step SB-4). To prevent the reference light and the signal light from interfering each other to influence the position specification and the abnormal condition determination, the signal light is not transmitted from the light transmitting unit 101 simultaneously with transmission of the reference light by the light emitting unit 103.

Furthermore, the position specifying unit 144 outputs a light reception instruction to the light reception controller 142 (step SB-5).

Based on the instruction input by the position specifying unit 144, the light reception controller 142 drives the light receiving unit 102, and calculates the reception light intensity based on an electrical signal output from the light receiving unit 102, to output to the position specifying unit 144 (step SB-6).

When the reception light intensity of the reference light at the light receiving unit 102 is lower than a predetermined range at any irradiation point until the scanning inside the scanning area with the reference light is completed, or when the number of the scanning points at which the reception light intensity equal to or higher than a predetermined value does not reach the number of scanning points that correspond to a size of the reflector 11, the position specifying unit 144 determines that at least a part of the reflector 11 is not positioned within a range of the scanning area (step SB-7, No), and causes the display unit 120 to display a fault state (step SB-8), and then, waits until a new instruction for the position specification is input (step SB-1).

When it is determined that at least a part of the reflector 11 is positioned within the range of the scanning area (step SB-7, Yes) and there is a point at which the reception light intensity of the reference light at the light receiving unit 102 that is higher than the predetermined range until the scanning inside the scanning area with the reference light is completed, the position specifying unit 144 determines that the reception light intensity at the light receiving unit has abnormally increased due to entry of strong disturbance light (step SB-9, Yes), and causes the display unit 120 to display a fault state (step SB-8).

When the reception light intensity of the reference light at the light receiving unit 102 is within the predetermined range, the position specifying unit 144 determines that the entire reflector 11 is positioned inside the range of the scanning area and there is no abnormal increase in the reception light intensity (step SB-9, No), and the position specifying unit 144 specifies a position of the reflector 11 based on the transmission direction of the reference light when the reception light intensity is at the peak, with reference to the transmission direction of the reference light input from the reference light scanning controller 143 and the reception light intensity of the reference light input from the light reception controller 142 (step SB-10). Thereafter, the position specifying unit 144 outputs the specified position of the reflector 11 to the optical axis controller 145 (step SB-11). Processes after this are performed returning to a main routine.

The position specifying unit 144 refers to the position information of the reflector 11 specified by the position specifying process, and when the position of the reflector 11 is out of the predetermined range (step SA-2, Yes), the position specifying unit 144 determines that adjustment of the transmission direction of the light transmitting unit 101 is necessary, and outputs position information of the reflector 11 to the optical axis controller 145. Furthermore, when the position specifying unit 144 determines that the reflector 11 is not positioned inside the area (irradiation effective area) in which the signal light is irradiated at intensity equal to or higher than a predetermined value, or determines, with reference to the position information of the reflector 11 input by position specifying unit 144, that the reflector 11 is not positioned inside an area to which light can be transmitted by the light transmitting unit 101 when the angle of the optical unit 100 is adjusted by the optical axis control device 110, exceeding an adjustable range of the optical axis (step SA-3, No), the display unit 120 is instructed to display the fault state (step SA-4).

When the reflector 11 is positioned in the area to which light can be transmitted by the light transmitting unit 101 (step SA-3, Yes), the optical axis controller 145 drives the optical axis control device 110 based on the position information of the reflector 11 to adjust the angle of the optical unit 100 such that the transmission direction of the light transmitting unit 101 almost matches the center of the reflector 11 (step SA-5). Thus, it is possible to position the reflector 11 at substantially the center in the irradiation range of the signal light transmitted by the light transmitting unit 101. The position of the reflector 11 in this case indicates the position of the reflector 11 relative to the light emitting unit 103 and is different from the position of the reflector 11 relative to the light transmitting unit 101 strictly. Therefore, based on the space between the light transmitting unit 101 and the light emitting unit 103 and the space between the detector main unit 10 and the reflector 11, the position of the reflector 11 relative to the light transmitting unit 101 is calculated, and the transmission direction of the signal light transmitted by the light transmitting unit 101 can be matched with this position.

When the optical axis adjustment is performed by the optical axis controller 145, the position specifying unit 144 refers to a counter (not shown). When the number of times for which the optical axis adjustment is performed by the optical axis controller 145 reaches a predetermined number (step SA-6, Yes), after resetting the counter (step SA-7), the position specifying unit 144 causes the display unit 120 to display the fault state (step SA-4). On the other hand, when the number of times for which the optical axis adjustment is performed is less than the predetermined number (step SA-6, No), the process returns to the position specifying process again (step SA-1). By setting a limit to the number of times for which the optical axis adjustment can be performed as described above, it is possible to notify, when the optical axis adjustment is performed frequently because of an abnormal condition of the installation environment or a problem in the installation condition, this fact to an operator and the like to prompt a change of the installation place or confirmation of the installation condition.

When the position of the reflector 11 is positioned within a predetermined range at step SA-2 (step SA-2, No), the position specifying unit 144 outputs the position information of the reflector 11 to the fire determining unit 146 (step SA-8). Subsequently, the position specifying unit 144 requests the light transmission control of the signal light to the signal light generation controller 141. The signal light generation controller 141 transmits the signal light from the light transmitting unit 101 based on this request. In synchronization with this, the light reception controller 142 causes the light receiving unit 102 to receive the signal light (step SA-9).

Subsequently, the fire determining unit 146 refers to the position information of the reflector 11 input by the position specifying unit 144, and performs correction of the reception light intensity of the signal light at the light receiving unit 102 based on the position information (step SA-10). Details of the reception-light intensity correction process are explained with reference to Fig. 8.

The reception-light intensity correction process is performed to separately correct the change in the reception light intensity caused by a change of the position of the reflector 11 relative to the light transmitting unit 101. Fig. 9 is a diagram showing diffusion of the signal light transmitted from the light transmitting unit 101 and an intensity distribution in the irradiation image of the signal light. As shown in Fig. 9, the signal light propagates in a space having a linear broadening at a predetermined angle from the light transmitting unit 101. Moreover, the signal light has a mountain shape having gentle slopes of intensity distribution in which the peak appears near the center of the irradiation image. Specifically, in the irradiation image on a plane that is at a predetermined distance away from the light transmitting unit 101 and is perpendicular to the light transmission direction of the signal light, when an angle between a line connecting the light transmitting unit 101 and the center of the irradiation image and a line connecting the light transmitting unit 101 and an arbitrary point in the irradiation image is θ, the two-dimensional distribution of relative intensity (hereinafter, "relative intensity") Pr relative to a peak intensity P (hereinafter, "reference value") at the center of the irradiation image is expressed as a function of θ, Pr(θ). Therefore, by specifying the angle θ with respect to the reflector 11 relative to the transmission direction of the signal light and by substituting this result into the function Pr(θ), the relative intensity with respect to the reference value of the signal light being irradiated on the reflector 11 at this moment can be estimated.

As shown in Fig. 8, when the signal light is received by the light receiving unit 102 (step SC-1), the fire determining unit 146 calculates the angle θ with respect to the reflector 11 relative to the transmission direction of the signal light transmitted from the light transmitting unit 101 based on the position information of the reflector 11 input from the position specifying unit 144 (step SC-2), and acquires the relative intensity by substituting the calculated θ into the function Pr(θ) (step SC-3). Subsequently, by dividing the reception light intensity of the signal light at the light receiving unit 102 by this relative intensity, reception light intensity (hereinafter, "corrected reception light intensity") when it is assumed that the transmission direction of the signal light is matched with the proximity of the center of the reflector 11 is acquired (step SC-4). The function Pr(θ) can be installed in the fire determining unit 146 in advance, or can be stored in the storage unit 130 as a table showing a relationship between θ and the relative intensity.

After the reception-light intensity correction process is performed, the process returns to the main routine shown in Fig. 6 again, and the fire determining unit 146 obtains the reference value with reference to the storage unit 130, and calculates a obscuration rate by comparing the corrected reception light intensity calculated by the reception-light intensity correction process and the reference value (step SA-11). The calculated obscuration rate is stored in the storage unit 130.

When the calculated obscuration rate and a change rate of the obscuration rate are within a range indicating the fire state (step SA-12, Yes), the fire determining unit 146 determines that a fire has occurred, and performs a predetermined process such as an alarm output, besides causing the display unit 120 to display the fire state (step SA-13).

When the calculated obscuration rate and the change rate of the obscuration rate are out of the range indicating the fire state (step SA-12, No) and within a range indicating that there is contamination in the light transmitting unit 101 or the light receiving unit 102 (step SA-14, Yes), the fire determining unit 146 performs the internal compensation process to the corrected reception light intensity calculated before to compensate the change of the obscuration rate (step SA-15). After the internal compensation process is performed, when a cumulative value of the internal compensation exceeds a predetermined range (step SA-16, Yes), the fire determining unit 146 causes the display unit 120 to display the fault state (step SA-4).

On the other hand, when the calculated obscuration rate and the change rate of the obscuration rate are out of the range indicating that there is contamination in the light transmitting unit 101 or the light receiving unit 102 (step SA-14, No) and within a range indicating that there is influence of disturbance light (step SA-17, Yes), the fire determining unit 146 causes the display unit to display the fault state (step SA-4). Moreover, when it is out of the range indicating that there is influence of disturbance light (step SA-17, No), the fire determining unit 146 determines that there is disturbance, the reason of which is not identified, and performs the internal compensation process (step SA-15).

The position specification of the reflector 11 and the adjustment of the transmission direction of the light transmitting unit 101 by the optical axis controller 145 described above can be repeated for a plurality of times. Thus, it is possible to approximate the center of the reflector 11 to the center of the irradiation range of the signal light transmitted by the light transmitting unit 101 further accurately.

Moreover, after the adjustment of the transmission direction of the light transmitting unit 101 is performed by the optical axis controller 145, determination of generation of contamination (step SA-14) and determination of entry of disturbance light (step SA-17) are performed, and when influence of the contamination or the entry of the disturbance light exceeds a predetermined range, the display unit 120 can be caused to display the fault state.

Furthermore, when the reception-light intensity correction is performed, the reference value stored in the storage unit 130 can be multiplied by the reception light intensity of the signal light at the light receiving unit 102 not dividing the reception light intensity by the calculated relative intensity. Thus, it is possible to acquire the reception light intensity (hereinafter, "corrected reference value") at the light receiving unit 102 when there is no light shielding factors such as smoke and contamination, with the transmission direction of the signal light transmitted by the light transmitting unit 101 at the time when the signal light is actually received by the light receiving unit 102 and the arrangement condition of the reflector 11. By calculating a obscuration rate of the reception light intensity at the light receiving unit 102 with respect to this corrected reference value, a obscuration rate resulted from smoke or contamination excluding influence of shift of the optical axis separately can be acquired. When this obscuration rate is out of a predetermined range, the fire determining unit 146 determines that a fire or fault has occurred.

Furthermore, the position specification of the reflector 11 and the adjustment of the transmission direction can be performed at the time of installation of the detector main unit 10, and alternatively, the position specification of the reflector 11 and the adjustment of the transmission direction can be performed during monitoring operation for a fire after installation of the detector main unit 10.

Technical Effects of First Embodiment:

As described above, according to the first embodiment, the reference light is transmitted from the light emitting unit 103 to the scanning area including the reflector 11 while changing the transmission direction, the position specification of the reflector 11 and the calculation processes using the position information and the like can be performed by the controller 140, based on the change in the reception light intensity of the reference light at the light receiving unit 102. Particularly, shift of the installation direction of the light transmitting unit 101 can be detected by the position specifying unit 144 distinguishing from influence of contamination in the light transmitting unit 101 or the light receiving unit 102 or intervention of smoke caused by a fire. Moreover, the calculation process on a value that is referred to when the fire determination or the fault determination is performed by the fire determining unit 146 can be performed based on the position information of the reflector 11. Therefore, separate correction each corresponding to a cause of a change in the reception light intensity of the signal light is possible, thereby extending a period until the correction limit is reached, and reducing the frequency of maintenance. Furthermore, position of the reflector 11 can be specified easily and accurately without a manual operation by an operator.

Moreover, the fire determining unit 146 can perform the fire determination and the fault determination based on comparison of the reference value when influence of shift of the optical axis is excluded by correcting the reference value that is referred to when the fire determination is performed based on the position information of the reflector 11, and the reception light intensity. Therefore, it is possible to prevent a false report and to suppress a change in the detection sensitivity, thereby improving the determination accuracy. Furthermore, it is possible to grasp the influence of contamination or disturbance light separately from shift of the optical axis. Therefore, it becomes possible to perform the internal correction separately, thereby extending a period until the internal correction limit is reached and reducing the frequency of maintenance.

Furthermore, the fire determining unit 146 can perform the fire determination and the fault determination based on comparison of the reception light intensity when influence of shift of the optical axis is excluded by correcting the reception light intensity that is used when the fire determination is performed based on the position information of the reflector 11, and the reference value. Therefore, it is possible to prevent a false report and to suppress a change in the detection sensitivity, thereby improving the determination accuracy. Moreover, similarly to the case where the reference value is corrected, it becomes possible to extend a period until the internal correction limit is reached and to reduce the frequency of maintenance.

Moreover, by adjusting the installation angle of the optical unit 100 by the optical axis controller 145 based on the position information of the reflector 11, the transmission direction of the light transmitting unit 101 and the position of the reflector 11 can be matched with each other. Thus, not only the transmission direction of the light transmitting unit 101 can be adjusted when the reflective-type beam detector 1 is installed, but also the adjustment of the transmission direction of the light transmitting unit 101 can be automatically performed at arbitrary timing when a relationship between the transmission direction of the light transmitting unit 101 and the position of the reflector 11 has changed from a relationship at the time of installation due to a warp on the installation surface on which the reflective-type beam detector 1 is installed or the like so that the signal light can be certainly irradiated on the reflector 11. In other words, since the position of the reflector 11 is directly specified, shift (shift of an optical axis) of the transmission direction of the signal light that is a change factor of the reception light intensity and a subject of correction can be directly and automatically corrected. Accordingly, a subject of the internal correction can be limited to a change in the reception light intensity caused by contamination on the light transmission/reception surface, contamination on the reflector 11, and the like. Therefore, it is possible to extend a period until the correction limit is reached and to reduce a cost required for maintenance of the reflective-type beam detector 1.

Furthermore, when the reflector 11 is not positioned in a range in which the optical axis adjustment is possible for the light transmitting unit 101, the optical axis controller 145 outputs information indicating a fault to the display unit 120 to display the fault state. Thus, when the installation position or the installation angle of the reflector 11 and the detector main unit 10 is not appropriate, or when the optical axis adjusting amount is accumulated due to increase in a warp on the installation surface and the like to reach the limit, it is possible to inform the fact to an operator or the like certainly.

Moreover, when the reception light intensity after the optical axis adjustment is out of a predetermined range, the fire determining unit 146 causes the display unit 120 to display information indicating a fault. Thus, when influence of contamination or entry of disturbance light on the reception light intensity exceeds a predetermined range, it is possible to determine this influence separately from influence of shift of the optical axis quickly and certainly, and to inform the fact to an operator or the like.

Furthermore, when the reception light intensity of the reference light at the light receiving unit 102 is lower than a predetermined value, or when the number of scanning points at which the reception light intensity equal to or higher than the predetermined value is less than the number of scanning points corresponding to the size of the reflector 11, the position specifying unit 144 outputs information indicating a fault to display the fault state. Thus, it is possible to certainly inform an operator or the like that the reflector 11 is not arranged inside the scanning area of the reference light, to prompt appropriate installation of the reflector 11 or the detector main unit 10. Moreover, also when the reception light intensity of the reference light at the light receiving unit 102 exceeds a predetermined range, information indicating a fault is output to the display unit 120 to display the fault state. Thus, it is possible to certainly inform an operator or the like that the reception light intensity has abnormally increased at the light receiving unit 102 due to entry of disturbance light or the like, to prompt investigation or removal of a disturbance factor.

When the transmission direction of the reference light is changed, it is scanned such that the transmission direction of the reference light is in one-dimensional or in two-dimensional. Therefore, it is possible to certainly scan the area in which the reflector 11 is installed with the reference light. Moreover, since the position of the reflector 11 is specified based on the peak of the reception light intensity when the reference light reflected from the reflector 11 is received by the light receiving unit 102, the position of the reflector 11 can be specified accurately: Thus, based on the specified reflector 11, the transmission direction of the signal light can be effectively and accurately adjusted.

Furthermore, by configuring the reference light controller 104 with a micromirror device, the scanning operation with the reference light can be performed in high speed with accuracy at low power, and the detector main unit 10 can be downsized.

### [Second Embodiment]

A second embodiment of the present invention is explained next. In the second embodiment, the light transmitting unit and the light emitting unit are integrated.

Configuration of Reflective-type beam detector:

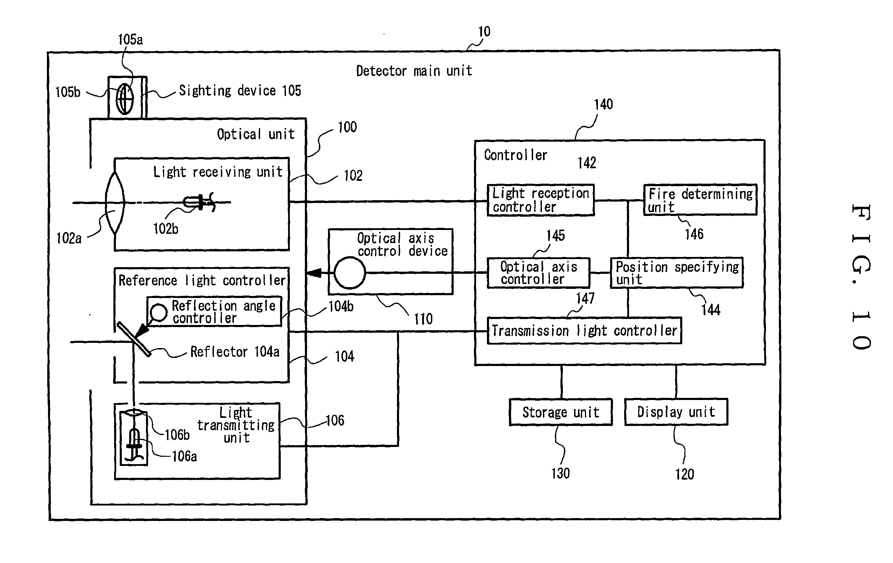

A configuration of a reflective-type beam detector according to the second embodiment is explained first. Fig. 10 is a block diagram schematically showing a function of an electrical configuration of a reflective-type beam detector according to the second embodiment. The configuration of the second embodiment is almost the same as the configuration of the first embodiment unless otherwise specified, and the configuration substantially the same as the configuration of the first embodiment is denoted with like reference characters as necessary, and redundant explanations will be omitted.

The optical unit 100 is a part where optical devices are equipped similarly to the optical unit 100 in the first embodiment and includes a light transmitting unit 106 as shown in Fig. 10. The light transmitting unit 106 combines the light transmitting unit 101 and the light emitting unit 103 in the first embodiment. In other words, the light transmitting unit 106 transmits a signal reference light that is used to detect smoke and to specify the position of the reflector 11. A specific configuration of the light transmitting unit 106 is arbitrary, and for example, it can be configured with an LED 106a and a lens 106b, or a laser diode can be used. The transmission direction of the signal reference light transmitted from the light transmitting unit 106 is changed by the reference light controller 104.

The controller 140 includes a transmission light controller 147 as shown in Fig. 10. The transmission light controller 147 has functions of both the signal light generation controller 141 and the reference light scanning controller 143. Specifically, the transmission light controller 147 controls light emission at the light transmitting unit 106 and the change of the transmission direction by the reference light controller 104 at the time of installing the reflective-type beam detector 1 and of monitoring a fire.

Operation of Reflective-type Beam Detector:

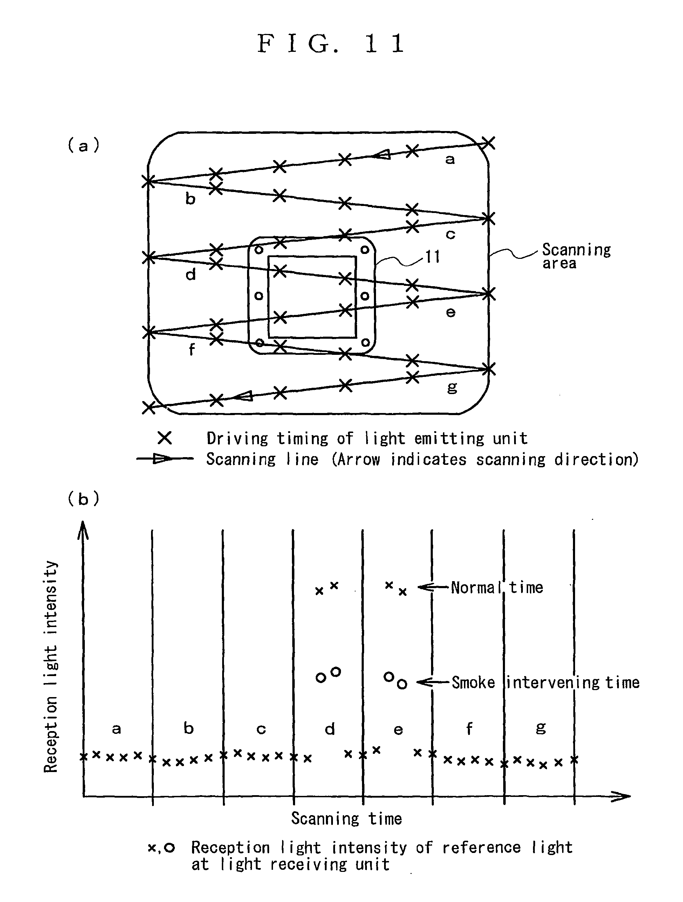

Scanning of the reflector 11 with the signal reference light and detection of smoke performed in the reflective-type beam detector 1 according to the second embodiment are explained next. Figs. 11 are diagrams showing a change in the reception light intensity when a proximity of the reflector 11 is scanned by the signal reference light; where Fig. 11A is a diagram showing a scanning area that is scanned by the signal reference light, and Fig. 11B is a graph showing a change in the reception light intensity of the signal reference light at the light receiving unit 102. A direction and an order of scanning inside the scanning area are arbitrary, and for example, as shown in Fig. 11 A, the signal reference light can be scanned along a scanning line that two-dimensionally passes and returns obliquely. Based on the transmission direction at the time when the peak of the reception light intensity at the light receiving unit 102 appears, the position of the reflector 11 is specified.

The reflective-type beam detector 1 according to the second embodiment not only specifies the position of the reflector 11 based on the change in the reception light intensity of the signal reference light, but also detects smoke. Specifically, when a fire occurs during the irradiation of the signal reference light to the scanning area, to cause a state where smoke is present between the detector main unit 10 and the reflector 11, a light amount of the signal reference light decreases by the time the signal reference light transmitted from the light transmitting unit 106 is received at the light receiving unit 102 due to smoke. Along with this, as indicated by circles in Fig. 11B, a peak value of the reception light intensity in the light receiving unit 102 decreases. Such a change in the reception light intensity is output from the light receiving unit 102 to the fire determining unit 146, and the fire determination is performed by the fire determining unit 146. A process performed by the fire determining unit 146 is explained next.

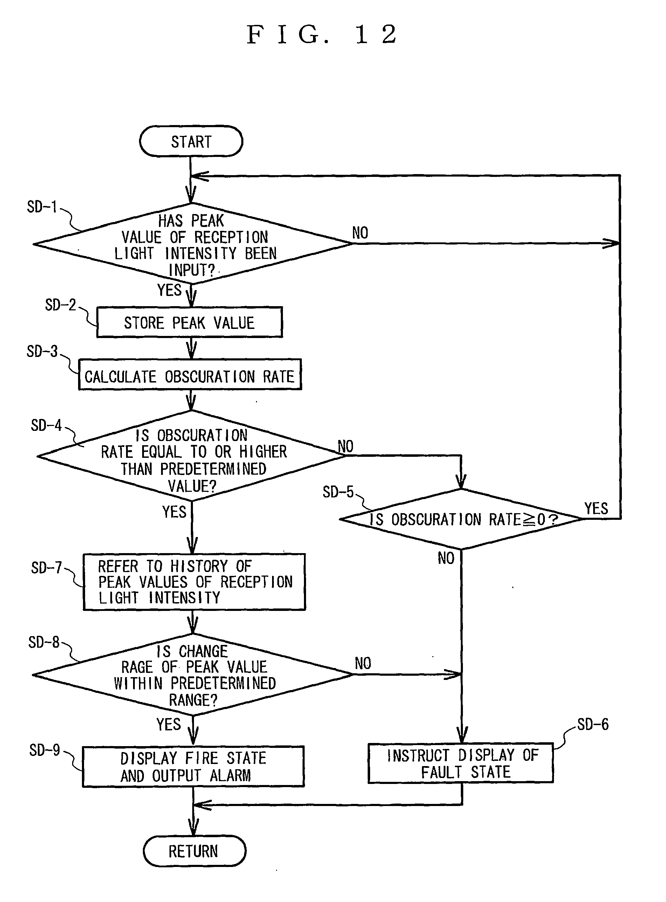

A flow of processes when the position specification of the reflector 11 and the fire determination are performed in the reflective-type beam detector 1 according to the second embodiment is explained next. Fig. 12 is a flowchart of a process regarding the fire determination of the reflector 11 after the reflective-type beam detector 1 is installed. First, (1) a flow of the position specification of the reflector 11 when the reflective-type beam detector 1 is installed is explained, and next, (2) a flow of the process regarding the position specification of the reflector 11 and the fire determination after the installation is explained.

(1) Position specification of reflector 11:

The position specification of the reflector 11 and the process of the optical axis control when the reflective-type beam detector 1 according to the second embodiment is installed are performed in the following flow. Specifically, (A) scanning of the scanning area with the signal reference light is performed, and (B) the position of the reflector 11 is specified based on the transmission direction and the reception light intensity at the light receiving unit 102 of the signal reference light. (C) When the reflector 11 is not positioned within a range in which the optical axis direction of the light receiving unit 102 and the center direction of the reflector 11 relative to the light receiving unit 102 can be substantially matched with each other when the angle of the optical unit 100 is adjusted by the optical axis control device 110, it is determined to be beyond the optical axis adjustable range, and the display unit 120 is caused to display the fault state. (D) On the other hand, when it is determined that the reflector 11 is positioned within the optical axis adjustable range, the optical controller 145 adjusts the angle of the optical unit 100 with the optical axis control device 110 based on the specified position of the reflector 11, and matches the optical axis direction of the light receiving unit 102 and the center direction of the reflector 11 relative to the light receiving unit 102 substantially.

Subsequently, (E) the position specifying unit 144 inputs a peak value of the reception light intensity at scanning with the signal reference light to the fire determining unit 146. (F) The fire determining unit 146 stores the input peak value in the storage unit 130 as a reference value. The reference value is referred to when the fire determination described next is performed by the fire determining unit 146.

(2) Position specification of reflector 11 and fire determination after installation

As for position specification of the reflector 11 and the fire determination, first, the process is performed following the same flow as that from (A) to (E) described above. Furthermore, (F) The fire determining unit 146 performs the fire determination process based on the input peak value. The flow of the fire determination process of (F) is explained below with reference to Fig. 12.

As shown in Fig. 12, when the peak value of the reception light intensity when the automatic optical axis adjustment is completed is input from the position specifying unit 144 (step SD-1, Yes), the fire determining unit 146 causes the storage unit 130 to store the peak value (step SD-2). With reference to the reference value stored in advance in the storage unit 130, the position specifying unit 144 then calculates the obscuration rate by comparing the reference value and the input peak value (step SD-3). When the calculated obscuration rate is lower than a predetermined value (step SD-4, No), it is determined that no fire has occurred. Further, when the calculated obscuration rate is a positive value (step SD-5, Yes), the fire determining unit 146 waits until the reception light intensity is input again from the position specifying unit 144. When the calculated obscuration rate is a negative value (step SD-5, No), the fire determining unit 146 determines that the reception light intensity has abnormally increased due to entry of strong disturbance light or the like, and causes the display unit 120 to display the fault state (step SD-6).

On the other hand, when the calculated obscuration rate is equal to or higher than the predetermined value (step SD-4, Yes), it is determined that there is a possibility of occurrence of a fire, and a history of the peak values of the reception light intensity that is stored in the storage unit 130 is referred (step SD-7). When the change rate of the peak value of the reception light intensity is within a predetermined range (step SD-8, Yes), it is determined that a fire has occurred, and the display unit 120 is caused to display the fire state and a process such as the alarm output is performed (step SSD-9). On the other hand, when the change rate of the peak value is out of the predetermined range (step SD-8, No), it is determined that there has been accumulation of contamination in the light transmitting unit 106 or the light receiving unit 102 or intervention of a light shielding object and the like, and the display unit 120 is caused to display the fault state (step SD-6).

The process from step SD-4 onward can be replaced with the process from step SA-12 onward shown in Fig. 6 among the processes performed in the first embodiment.

### Technical Effects of Second Embodiment:

According to the second embodiment, since the signal reference light to perform the position specification of the reflector 11 and the fire determination can be transmitted from the light transmitting unit 106, in addition to basic effects of in the first embodiment, downsizing and low-power consumption can be achieved in the detector main unit 10. Moreover, when the reflector 11 is scanned with the signal reference light, the signal reference light Is irradiated on different areas on the reflector 11a plurality of times, and the light receiving unit 102 receives the light reflected form the reflector 11 each time. Since the fire determining unit 146 performs the fire determination a plurality of times during one scanning based on these, accuracy in the fire determination can be improved.

### [III] Modification of Each Embodiment

While embodiments of the present invention have been explained above, the specific configuration and means of the present invention can be arbitrarily changed or modified within the scope of the appended claims, for example as explained below.

### Problem to be Solved and Effects of Present Embodiments

First, problems to be solved by the present Invention and effects of the invention are not limited to the ones described above, and problems not described above can be solved and effects not described above can be achieved by the present invention.

While in the first embodiment, by rotating the optical unit 100 by, the light transmitting unit 101, the light receiving unit 102, the light emitting unit 103, and the reference light controller 104 are integrally rotated, it can be envisaged that only the light transmitting unit 101 and the light receiving unit 102 are integrally rotated by the optical axis control device 110.

### Separate-Type Light Beam Detector:

While in the first and second embodiments, the position specifying system is applied to the reflective-type beam detector in which the light transmitting unit and the light receiving unit are closely arranged, the position specifying system can be applied to a separate-type beam detector in which the light transmitting unit and the light receiving unit are arranged to be opposed to each other. In the separate-type beam detector, the light receiving unit is arranged so as to oppose to the transmission direction in which the signal light is transmitted from the light transmitting unit. Therefore, it is necessary to adjust the optical axis of the light transmitting unit so that the signal light is certainly irradiated to the light receiving unit. By applying the position specifying system according to the present embodiment, it is possible to specify the position of the light receiving unit easily and accurately, and to perform the optical axis adjustment of the light transmitting unit accurately. Furthermore, it is possible to determine what Is a cause of a change In the reception light Intensity at the light receiving unit, a fire, shift of the optical axis, or contamination on the optical parts of the light transmitting unit or the light receiving unit, all the time. Therefore, it is possible to remarkably improve the fire determination performance.

### Applicable Devices of Position Specifying System:

While in the first and second embodiments, an example of the beam detector to which the position specifying system is applied has been explained, the position specifying system can be applied to other uses. For example, the position specifying system can be applied to a security system that includes a light transmitter that transmits an infrared ray beam and a light receiver that receives the infrared ray beam transmitted from the light transmitter, and detects intrusion of a suspicious person when the infrared ray beam Is cut off between the light transmitter and the light receiver. In this case, the position specifying system according to the present invention can be used to specify a position of a light receiver relative to a light transmitter.

### [IV] Technical Effect of the Embodiments

According to the present embodiment, it is possible to cause a light emitting unit to transmit a reference light to a scanning area including a reflector while changing the transmission direction, and to cause a reception-light intensity processing unit to perform a process based on a change in the reception light intensity of the reference light at the light receiving unit. Therefore, position specification of the reflector and a calculation process using the position information can be easily and accurately performed.

Moreover, according to the present embodiment, by configuring a reference light controller with a micromirror device, a scanning operation with the reference light can be performed in high speed with accuracy at low power, and further, the reception-light intensity processing system can be downsized.

Furthermore, according to the present embodiment, it is possible to cause the light emitting unit to transmit the reference light to a scanning area including a reflector while changing the transmission direction, and to cause a reception-light intensity processing unit to perform a process based on a change in the reception light intensity of the reference light at the light receiving unit. Therefore, position specification of the reflector relative to the light transmitting unit of the beam detector and a calculation process using the position information can be easily and accurately performed.

Moreover, according to the present embodiment, the light transmitting unit, the reflector, the light receiving unit, and the light emitting unit are appropriately arranged. Therefore, by transmitting the signal light or the reference light that is transmitted from the light transmitting unit or the light emitting unit to the reflector, it is possible to make the light receiving unit receive the light reflected from the reflector.

Moreover, according to the present embodiment, shift of the installation direction of the light transmitting unit can be detected by a position specifying unit distinguishing from influence of contamination in the light transmitting unit or the light receiving unit or intervention of smoke caused by a fire. Furthermore, it is possible to cause an abnormal condition determining unit to perform a calculation process on a value that is referred to when the fire determination or the fault determination is performed based on the position information of the reflector. Therefore, it becomes possible to perform separate correction each corresponding to a cause of a change in the reception light intensity of the signal light, thereby extending a period until the correction limit is reached, and reducing the frequency of maintenance. Furthermore, a position of the reflector can be specified easily and accurately without a manual operation by an operator.

Furthermore, according to the present embodiment, when the light transmitting unit and the light receiving unit are arranged to be opposed to each other, it is possible to transmit the reference light from the light emitting unit to a scanning area including the light receiving unit while changing the transmission direction, and to cause the reception light intensity controller to perform position specification of the light receiving unit or a calculation process using the position information easily and accurately.

Moreover, according to the present embodiment, shift of the installation direction of the light transmitting unit can be detected by a position specifying unit distinguishing from influence of contamination in the light transmitting unit or the light receiving unit or intervention of smoke caused by a fire. Furthermore, it is possible to cause an abnormal condition determining unit to perform a calculation process on a value that is referred to when the fire determination or the fault determination is performed based on the position information of the light receiving unit. Therefore, it becomes possible to perform separate correction each corresponding to a cause of a change in the reception light intensity of the signal light, thereby extending a period until the correction limit is reached, and reducing the frequency of maintenance. Furthermore, a position of the light receiving unit can be specified easily and accurately without a manual operation by an operator.

Furthermore, according to the present embodiment, an abnormal condition determining unit can perform the fire determination or the fault determination based on comparison of the reference value when influence of shift of the optical axis is excluded by correcting the reference value that is referred to when the fire determination is performed based on the position information of the reflector or the light receiving unit, and the reception light intensity. Therefore, it is possible to prevent a false report and to suppress a change in the detection sensitivity, thereby improving the determination accuracy. Furthermore, it is possible to grasp the influence of contamination or disturbance light separately from influence of shift of the optical axis. Therefore, it becomes possible to perform the internal correction separately, thereby extending a period until the internal correction limit is reached and reducing the frequency of maintenance.

Moreover, according to the present embodiment, the abnormal condition determining unit can perform the fire determination or the fault determination based on comparison of the reception light intensity when influence of shift of the optical axis is excluded by correcting the reception light intensity that is used when the fire determination is performed based on the position information of the reflector or the light receiving unit, and the reference value. Therefore, it is possible to prevent a false report and to suppress a change in the detection sensitivity, thereby improving the determination accuracy. Moreover, similarly to the case where the reference value is corrected, it becomes possible to extend a period until the internal correction limit is reached and to reduce the frequency of maintenance.

Furthermore, according to the present embodiment, when the reflector or the light receiving unit is not positioned within a range in which the signal light is irradiated at intensity equal to or higher than a predetermined value from the light transmitting unit, the position specifying unit outputs information indicating a fault. Thus, when the installation position or the installation angle of the reflector or the beam detector is not appropriate, and as a result, the signal light having sufficient intensity is not irradiated on the reflector or the light receiving unit, it is possible to certainly inform this fact to an operator or the like.

Moreover, according to the present embodiment, it is possible to match the transmission direction of the light transmitting unit and the position of the reflector or the light receiving unit by adjusting the installation angle of the light transmitting unit by the optical axis control device based on the specified position of the reflector or the light receiving unit. Thus, not only the transmission direction of the light transmitting unit can be adjusted when the reflective-type beam detector is installed, but also the adjustment of the transmission direction of the light transmitting unit can be automatically performed at arbitrary timing when a relationship between the transmission direction of the light transmitting unit and the position of the reflector or the light receiving unit has changed from a relationship at the time of installation due to a warp on the installation surface on which the reflective-type beam detector is installed or the like so that the signal light can be certainly irradiated on the reflector or the light receiving unit. In other words, since the position of the reflector or the light receiving unit is directly specified, shift (shift of an optical axis) of the transmission direction of the signal light that is a change factor of the reception light intensity and a subject of correction can be directly and automatically corrected. Accordingly, a subject of the internal correction can be limited to a change in the reception light intensity caused by contamination on the light transmission/reception surface, contamination on the reflector, and the like; therefore, it is possible to extend a period until the correction limit is reached and to reduce a cost required for maintenance of the reflective-type beam detector.

Furthermore, according to the present embodiment, when the reflector or the light receiving unit is not positioned in a range in which the optical axis adjustment is possible for the light transmitting unit, the optical axis controller outputs information indicating a fault. Thus, when the installation position or the installation angle of the reflector and the beam detector is not appropriate, or when the optical axis adjusting amount is accumulated due to increase of a warp on the installation surface and the like to reach the limit, it is possible to inform the fact to an operator or the like certainly.

Moreover, according to the present embodiment, when the reception light intensity after the optical axis adjustment is out of a predetermined range, the abnormal condition determining unit outputs information indicating a fault. Thus, when influence of contamination or entry of disturbance light on the reception light intensity exceeds a predetermined range, it is possible to determine this influence separately from influence of shift of the optical axis quickly and certainly, and to inform the fact to an operator or the like.

Furthermore, according to the present embodiment, when the reception light intensity of the reference light at the light receiving unit is lower than a predetermined value, or when the number of scanning points at which the reception light intensity equal to or higher than the predetermined value is less than the number of scanning points corresponding to the size of the reflector, the reception-light intensity processing unit outputs information indicating a fault. Thus, it is possible to certainly inform an operator or the like that the reflector or the light receiving unit is not arranged inside the scanning area of the reference light, to prompt appropriate installation of the reflector or the beam detector. Moreover, also when the reception light intensity of the reference light at the light receiving unit exceeds a predetermined range, information indicating a fault is output. Thus, it is possible to certainly inform an operator or the like that the reception light intensity has abnormally increased at the light receiving unit due to entry of disturbance light or the like, to prompt investigation or removal of a disturbance factor.

Moreover, according to the present embodiment, when the transmission direction of the reference light is changed, it is scanned such that the transmission direction of the reference light is in one-dimensional or in two-dimensional. Therefore, it is possible to certainly scan the area in which the reflector or the light receiving unit is installed with the reference light. Moreover, since the position of the reflector or the light receiving unit is specified based on the peak of the reception light intensity when the reference light reflected from the reflector or the light receiving unit is received by the light receiving unit, the position of the reflector or the light receiving unit can be specified accurately. Thus, based on the specified reflector or the specified light receiving unit, the transmission direction of the signal light can be effectively and accurately adjusted.

Furthermore, by configuring the reference light controller with a micromirror device, the scanning operation with the reference light can be performed in high speed with accuracy at low power, and further, the beam detector can be downsized. As a micromirror device, for example, MEMS (Micro Electro Mechanical Systems) device can be used.

Moreover, according to the present embodiment, since signal reference light to perform the position specification of the reflector or the light receiving unit and the fire determination can be transmitted from the light transmitting unit, in addition to basic effects described above, downsizing and low power consumption can be achieved in the beam detector. Moreover, when the reflector is scanned with the signal reference light, the signal reference light is irradiated on different areas on the reflector a plurality of times, and the light receiving unit received the light reflected from the reflector each time. Since the beam detector performs the fire determination based on these, accuracy in the fire determination can be improved.

## Claims

1. A reception-light intensity processing system (10) comprising:
a light emitting unit (103) operable to emit reference light;
a light transmitting unit (101) operable to transmit signal light,
a light receiving unit (102) operable to receive the reference light emitted from the light emitting unit (103) and the signal light transmitted from the light transmitting unit (101);
a reference light controller (104) operable to change a transmission direction of the reference light; and
a reception-light intensity processing unit (140) operable to perform a predetermined process based on a change in reception light intensity of the reference light at the light receiving unit (102) when the transmission direction of the reference light is changed by the reference light controller (104), **characterized in that**:
the reception-light intensity processing unit (140) includes:
a position specifying unit (144) operable to specify a position of the light receiving unit (102), based on the change in the reception light intensity of the reference light at the light receiving unit (102); and
an abnormal condition determining unit (146) operable to perform calculation of a predetermined value based on the position of the light receiving unit (102) specified by the position specifying unit (144), and to perform the abnormal condition determination based on the result of the calculation.

2. A reception-light intensity processing system (10) comprising:
a light emitting unit (103) operable to emit reference light;
a light transmitting unit (101) operable to transmit signal light,
a light receiving unit (102) operable to receive the reference light emitted from the light emitting unit (103) and the signal light transmitted from the light transmitting unit (101);
a reference light controller (104) operable to change a transmission direction of the reference light; and
a reception-light intensity processing unit (140) operable to perform a predetermined process based on a change in reception light intensity of the reference light at the light receiving unit (102) when the transmission direction of the reference light is changed by the reference light controller (104), **characterized in that**:
the reception-light intensity processing unit (140) includes
a position specifying unit (144) operable to specify a position of a reflector (11) operable to reflect the reference light emitted from the light emitting unit (103) to the light receiving unit (102) and operable to reflect the signal light transmitted from the light transmitting unit (101) to the light receiving unit (102), based on the change in the reception light intensity of the reference light at the light receiving unit (102); and
an abnormal condition determining unit (146) operable to perform calculation of a predetermined value based on the position of the reflector (11) specified by the position specifying unit (144), and to perform the abnormal condition determination based on the result of the calculation.

3. A processing system according to claim 1 or 2, wherein
the reference light controller (104) includes a turnable reflector that is freely turnably supported and is operable to reflect the reference light emitted from the light emitting unit (103), and a reflection angle controller (104b) operable to control turning of the turnable reflector.

4. A processing system according to claim 3, wherein
the reference light controller is a micromirror device.

5. A processing system according to claim 1 or 2, wherein
said light emitting unit (103) and the light transmitting unit (101) are arranged close to each other and in a state of being fixed to each other.

6. A processing system according to claim 2, wherein
the reflector (11) is arranged to be opposed to a transmission direction of the signal light, and
the light receiving unit (102) is fixed close to the light transmitting unit (101) such that the transmission direction of the signal light is substantially parallel with a reception direction of the light receiving unit (102).

7. A processing system according to claim 1 or 2, wherein
the abnormal condition determining unit (146) is operable to correct a predetermined value to be compared with the reception light intensity of the signal light when the abnormal condition determination is performed.

8. A processing system according to claim 1 or 2, wherein
the abnormal condition determining unit (146) is operable to correct the reception light intensity of the signal light at the light receiving unit (102).

9. A processing system according to claim 1 or 2, wherein
the abnormal condition determining unit (146) is operable to perform an internal compensation process to the reception light intensity.

10. A processing system according to claim 1 or 2, wherein
the position specifying unit is operable to output, when the specified position of the reflector is out of a predetermined range, information indicating a fault state.

11. A processing system according to claim 1 or 2, further comprising
an optical axis controller (110) operable to change an installation angle of the light transmitting unit (101) based on information output from the position specifying unit (144).

12. A processing system according to claim 11, wherein
the optical axis controller (110) is operable to output information indicating a fault state, when an installation angle of the light transmitting unit to be changed based on the information output from the position specifying unit (144) exceeds a changeable range.

13. A processing system according to claim 11 or 12, wherein
the abnormal condition determining unit (146) is operable to output information indicating a fault, when reception light intensity of the signal light at the light receiving unit (102) is out of a predetermined range when an installation direction of the light transmitting unit is changed by the optical axis controller.

14. A processing system according to claim 1 or 2, wherein
the reception-light intensity processing unit (140) is operable to output information indicating a fault state, when reception light intensity of the signal light at the light receiving unit (102) is out of a predetermined range when the transmission direction of the reference light is changed by the reference light controller.

15. A processing system according to claim 1 or 2, wherein
the reference light controller (104) is operable to change the transmission direction of the reference light such that a surface on which the reference light is irradiated is scanned one-dimensionally or two-dimensionally with the reference light, and
the reception-light intensity processing unit (140) is operable to perform a predetermined process based on a transmission direction of the reference light when the reception light intensity of the reference signal at the light receiving unit (102) becomes a maximal value.

16. A processing system according to claim 1 or 2, wherein
the reference light controller (104) includes a turnable reflector that is freely turnably supported and is operable to reflect the reference light emitted from the light emitting unit, and a reflection angle controller operable to control turning of the turnable reflector.

17. A processing system according to claim 15, wherein
the reference light controller is a micromirror device.

18. A processing system according to claim 1 or 2, wherein
the light transmitting unit serves also as the light emitting unit.

## Patentansprüche

1. Empfangslichtintensität-Verarbeitungssystem (10), welches das Folgende umfasst:
eine lichtemittierende Einheit (103), welche so zu betreiben ist, dass sie Referenzlicht emittiert;
eine Lichtübertragungseinheit (101), welche so zu betreiben ist, dass sie Signallicht überträgt,
eine Lichtempfangseinheit (102), welche so zu betreiben ist, dass sie das Referenzlicht, das von der lichtemittierenden Einheit (103) emittiert wird, und
das Signallicht empfängt, das von der Lichtübertragungseinheit (101) übertragen wird;
eine Referenzlichtsteuerung (104), welche so zu betreiben ist, dass sie eine Übertragungsrichtung des Referenzlichts ändert; und
eine Empfangslichtintensität-Verarbeitungseinheit (140), welche so zu betreiben ist, dass sie ein vorgegebenes Verfahren auf der Grundlage einer Änderung der Empfangslichtintensität des Referenzlichts an der Lichtempfangseinheit (102) durchführt, wenn die Übertragungsrichtung des Referenzlichts durch die Referenzlichtsteuerung (104) geändert wird, **dadurch gekennzeichnet, dass**:
die Empfangslichtintensität-Verarbeitungseinheit (140) das Folgende aufweist:
eine Positionsspezifizierungseinheit (144), welche so zu betreiben ist, dass sie auf der Grundlage der Änderung der Empfangslichtintensität des Referenzlichts an der Lichtempfangseinheit (102) eine Position der Lichtempfangseinheit (102) spezifiziert; und
eine Bestimmungseinheit für eine abnormale Bedingung (146), welche so zu betreiben ist, dass sie auf der Grundlage der Position der Lichtempfangseinheit (102), die durch die Positionsspezifizierungseinheit (144) spezifiziert wird, eine Berechnung eines vorgegebenen Werts durchführt und auf der Grundlage des Ergebnisses der Berechnung die Bestimmung der abnormalen Bedingung durchführt.

2. Empfangslichtintensität-Verarbeitungssystem (10), welches das Folgende umfasst:
eine lichtemittierende Einheit (103), welche so zu betreiben ist, dass sie Referenzlicht emittiert;
eine Lichtübertragungseinheit (101), welche so zu betreiben ist, dass sie Signallicht überträgt,
eine Lichtempfangseinheit (102), welche so zu betreiben ist, dass sie das Referenzlicht, das von der lichtemittierenden Einheit (103) emittiert wird, und das Signallicht empfängt, das von der Lichtübertragungseinheit (101) übertragen wird;
eine Referenzlichtsteuerung (104), welche so zu betreiben ist, dass sie eine Übertragungsrichtung des Referenzlichts ändert; und
eine Empfangslichtintensität-Verarbeitungseinheit (140), welche so zu betreiben ist, dass sie ein vorgegebenes Verfahren auf der Grundlage einer Änderung der Empfangslichtintensität des Referenzlichts an der Lichtempfangseinheit (102) durchführt, wenn die Übertragungsrichtung des Referenzlichts durch die Referenzlichtsteuerung (104) geändert wird, **dadurch gekennzeichnet, dass**:
die Empfangslichtintensität-Verarbeitungseinheit (140) das Folgende aufweist:
eine Positionsspezifizierungseinheit (144), welche so zu betreiben ist, dass sie auf der Grundlage der Änderung der Empfangslichtintensität des Referenzlichts an der Lichtempfangseinheit (102) eine Position eines Reflektors (11) spezifiziert, der so zu betreiben ist, dass er das von der lichtemittierenden Einheit (103) emittierte Referenzlicht zu der Lichtempfangseinheit (102) reflektiert, und so zu betreiben ist, dass er das von der Lichtübertragungseinheit (101) übertragene Signallicht zu der Lichtempfangseinheit (102) reflektiert; und
eine Bestimmungseinheit für eine abnormale Bedingung (146), welche so zu betreiben ist, dass sie auf der Grundlage der Position des Reflektors (11), die durch die Positionsspezifizierungseinheit (144) spezifiziert wird, eine Berechnung eines vorgegebenen Werts durchführt und auf der Grundlage des Ergebnisses der Berechnung die Bestimmung der abnormalen Bedingung durchführt.

3. Verarbeitungssystem nach Anspruch 1 oder 2, wobei
die Referenzlichtsteuerung (104) einen drehbaren Reflektor, welcher frei drehbar gelagert ist und so zu betreiben ist, dass er das von der lichtemittierenden Einheit (103) emittierte Referenzlicht reflektiert, und eine Reflexionswinkelsteuerung (104b) aufweist, welche so zu betreiben ist, dass sie die Drehung des drehbaren Reflektors steuert.

4. Verarbeitungssystem nach Anspruch 3, wobei
es sich bei der Referenzlichtsteuerung um eine Mikrospiegeleinheit handelt.

5. Verarbeitungssystem nach Anspruch 1 oder 2, wobei
die lichtemittierende Einheit (103) und die Lichtübertragungseinheit (101) nah beieinander und in einem aneinander befestigten Zustand angeordnet sind.

6. Verarbeitungssystem nach Anspruch 2, wobei
der Reflektor (11) so angeordnet ist, dass er einer Übertragungsrichtung des Signallichts entgegen gesetzt ist, und
die Lichtempfangseinheit (102) eng an der Lichtübertragungseinheit (101) befestigt ist, so dass die Übertragungsrichtung des Signallichts im Wesentlichen parallel zu einer Empfangsrichtung der Lichtempfangseinheit (102) verläuft.

7. Verarbeitungssystem nach Anspruch 1 oder 2, wobei
die Bestimmungseinheit für eine abnormale Bedingung (146) so zu betreiben ist, dass sie einen vorgegebenen Wert korrigiert, der mit der Empfangslichtintensität des Signallichts zu vergleichen ist, wenn die Bestimmung der abnormalen Bedingung durchgeführt wird.

8. Verarbeitungssystem nach Anspruch 1 oder 2, wobei
die Bestimmungseinheit für eine abnormale Bedingung (146) so zu betreiben ist, dass sie die Empfangslichtintensität des Signallichts an der Lichtempfangseinheit (102) korrigiert.

9. Verarbeitungssystem nach Anspruch 1 oder 2, wobei
die Bestimmungseinheit für eine abnormale Bedingung (146) so zu betreiben ist, dass sie ein internes Kompensationsverfahren an der Empfangslichtintensität durchführt.

10. Verarbeitungssystem nach Anspruch 1 oder 2, wobei
die Positionsspezifizierungseinheit so zu betreiben ist, dass sie Informationen ausgibt, welche einen Fehlerzustand anzeigen, wenn die spezifizierte Position des Reflektors außerhalb eines vorgegebenen Bereichs liegt.

11. Verarbeitungssystem nach Anspruch 1 oder 2, welches ferner das Folgende umfasst:
eine Steuerung einer optischen Achse (110), welche so zu betreiben ist, dass sie auf der Grundlage der Ausgabe von Informationen durch die Positionsspezifizierungseinheit (144) einen Installationswinkel der Lichtübertragungseinheit (101) ändert.

12. Verarbeitungssystem nach Anspruch 11, wobei
die Steuerung der optischen Achse (110) so zu betreiben ist, dass sie Informationen ausgibt, welche einen Fehlerzustand anzeigen, wenn ein Installationswinkel der Lichtübertragungseinheit, der auf der Grundlage der Ausgabe von Informationen durch die Positionsspezifizierungseinheit (144) zu ändern ist, einen veränderbaren Bereich übersteigt.

13. Verarbeitungssystem nach Anspruch 11 oder 12, wobei die Bestimmungseinheit für eine abnormale Bedingung (146) so zu betreiben ist, dass sie Informationen ausgibt, welche einen Fehler anzeigen, wenn die Empfangslichtintensität des Signallichts an der Lichtempfangseinheit (102) außerhalb eines vorgegebenen Bereichs liegt, wenn eine Installationsrichtung der Lichtübertragungseinheit durch die Steuerung der optischen Achse geändert wird.

14. Verarbeitungssystem nach Anspruch 1 oder 2, wobei
die Empfangslichtintensität-Verarbeitungseinheit (140) so zu betreiben ist, dass sie Informationen ausgibt, welche einen Fehlerzustand anzeigen, wenn die Empfangslichtintensität des Signallichts an der Lichtempfangseinheit (102) außerhalb eines vorgegebenen Bereichs liegt, wenn die Übertragungsrichtung des Referenzlichts durch die Referenzlichtsteuerung geändert wird.

15. Verarbeitungssystem nach Anspruch 1 oder 2, wobei
die Referenzlichtsteuerung (104) so zu betreiben ist, dass sie die Übertragungsrichtung des Referenzlichts ändert, so dass eine Fläche, auf welche das Referenzlicht einfällt, eindimensional oder zweidimensional mit dem Referenzlicht abgetastet wird, und
die Empfangslichtintensität-Verarbeitungseinheit (140) so zu betreiben ist, dass sie ein vorgegebenes Verfahren auf der Grundlage einer Übertragungsrichtung des Referenzlichts durchführt, wenn die Empfangslichtintensität des Referenzsignals an der Lichtempfangseinheit (102) einen Maximalwert erreicht.

16. Verarbeitungssystem nach Anspruch 1 oder 2, wobei die Referenzlichtsteuerung (104) einen drehbaren Reflektor, welcher frei drehbar gelagert ist und so zu betreiben ist, dass er das von der lichtemittierenden Einheit emittierte Referenzlicht reflektiert, und eine Reflexionswinkelsteuerung aufweist, welche so zu betreiben ist, dass sie die Drehung des drehbaren Reflektors steuert.

17. Verarbeitungssystem nach Anspruch 15, wobei
es sich bei der Referenzlichtsteuerung um eine Mikrospiegeleinheit handelt.

18. Verarbeitungssystem nach Anspruch 1 oder 2, wobei
die Lichtübertragungseinheit auch als lichtemittierende Einheit dient.

## Revendications

1. Système de traitement d'intensité de lumière de réception (10) comprenant :
une unité d'émission de lumière (103) pouvant être mise en oeuvre pour émettre une lumière de référence ;
une unité de transmission de lumière (101) pouvant être mise en oeuvre pour transmettre une lumière de signal,
une unité de réception de lumière (102) pouvant être mise en oeuvre pour recevoir la lumière de référence émise en provenance de l'unité d'émission de lumière (103) et la lumière de signal transmise en provenance de l'unité de transmission de lumière (101) ;
une unité de commande de lumière de référence (104) pouvant être mise en oeuvre pour changer une direction de transmission de la lumière de référence ; et
une unité de traitement d'intensité de lumière de réception (140) pouvant être mise en oeuvre pour effectuer un processus prédéterminé en se basant sur un changement d'intensité de lumière de réception de la lumière de référence au niveau de l'unité de réception de lumière (102) quand la direction de transmission de la lumière de référence est changée par l'unité de commande de lumière de référence (104), **caractérisé en ce que** :
l'unité de traitement d'intensité de lumière de réception (140) inclut :
une unité de spécification de position (144) pouvant être mise en oeuvre pour spécifier une position de l'unité de réception de lumière (102), en se basant sur le changement de l'intensité de lumière de réception de la lumière de référence au niveau de l'unité de réception de lumière (102) ; et
une unité de détermination d'état anormal (146) pouvant être mise en oeuvre pour effectuer un calcul d'une valeur prédéterminée en se basant sur la position de l'unité de réception de lumière (102) spécifiée par l'unité de spécification de position (144), et pour effectuer la détermination d'état anormal en se basant sur le résultat du calcul.

2. Système de traitement d'intensité de lumière de réception (10) comprenant :
une unité d'émission de lumière (103) pouvant être mise en oeuvre pour émettre une lumière de référence ;
une unité de transmission de lumière (101) pouvant être mise en oeuvre pour transmettre une lumière de signal,
une unité de réception de lumière (102) pouvant être mise en oeuvre pour recevoir la lumière de référence émise en provenance de l'unité d'émission de lumière (103) et la lumière de signal transmise en provenance de l'unité de transmission de lumière (101) ;
une unité de commande de lumière de référence (104) pouvant être mise en oeuvre pour changer une direction de transmission de la lumière de référence ; et
une unité de traitement d'intensité de lumière de réception (140) pouvant être mise en oeuvre pour effectuer un processus prédéterminé en se basant sur un changement d'intensité de lumière de réception de la lumière de référence au niveau de l'unité de réception de lumière (102) quand la direction de transmission de la lumière de référence est changée par l'unité de commande de lumière de référence (104), **caractérisé en ce que** :
l'unité de traitement d'intensité de lumière de réception (140) inclut
une unité de spécification de position (144) pouvant être mise en oeuvre pour spécifier une position d'un réflecteur (11) pouvant être mis en oeuvre pour réfléchir la lumière de référence émise en provenance de l'unité d'émission de lumière (103) au niveau de l'unité de réception de lumière (102) et pouvant être mis en oeuvre pour réfléchir la lumière de signal transmise en provenance de l'unité de transmission de lumière (101) au niveau de l'unité de réception de lumière (102), en se basant sur le changement de l'intensité de lumière de réception de la lumière de référence au niveau de l'unité de réception de lumière (102) ; et
une unité de détermination d'état anormal (146) pouvant être mise en oeuvre pour effectuer un calcul d'une valeur prédéterminée en se basant sur la position du réflecteur (11) spécifiée par l'unité de spécification de position (144), et pour effectuer la détermination d'état anormal en se basant sur le résultat du calcul.

3. Système de traitement selon la revendication 1 ou 2, dans lequel
l'unité de commande de lumière de référence (104) inclut un réflecteur pouvant être tourné qui est supporté de manière à pouvoir tourner librement et qui peut être mis en oeuvre pour réfléchir la lumière de référence émise en provenance de l'unité d'émission de lumière (103), et une unité de commande d'angle de réflexion (104b) pouvant être mise en oeuvre pour commander la rotation du réflecteur pouvant être tourné.

4. Système de traitement selon la revendication 3, dans lequel
l'unité de commande de lumière de référence est un dispositif à micromiroir.

5. Système de traitement selon la revendication 1 ou 2, dans lequel
ladite unité d'émission de lumière (103) et l'unité de transmission de lumière (101) sont agencées près l'une de l'autre et dans un état de fixation l'une à l'autre.

6. Système de traitement selon la revendication 2, dans lequel
le réflecteur (11) est agencé pour être opposé à une direction de transmission de la lumière de signal, et
l'unité de réception de lumière (102) est fixée près de l'unité de transmission de lumière (101) de sorte que la direction de transmission de la lumière de signal est sensiblement parallèle à une direction de réception de l'unité de réception de lumière (102).

7. Système de traitement selon la revendication 1 ou 2, dans lequel
l'unité de détermination d'état anormal (146) peut être mise en oeuvre pour corriger une valeur prédéterminée à comparer à l'intensité de lumière de réception de la lumière de signal quand la détermination d'état anormal est effectuée.

8. Système de traitement selon la revendication 1 ou 2, dans lequel
l'unité de détermination d'état anormal (146) peut être mise en oeuvre pour corriger l'intensité de lumière de réception de la lumière de signal au niveau de l'unité de réception de lumière (102).

9. Système de traitement selon la revendication 1 ou 2, dans lequel
l'unité de détermination d'état anormal (146) peut être mise en oeuvre pour effectuer un processus de compensation interne sur l'intensité de lumière de réception.

10. Système de traitement selon la revendication 1 ou 2, dans lequel
l'unité de spécification de position peut être mise en oeuvre pour sortir, quand la position spécifiée du réflecteur est hors d'une plage prédéterminée, des informations indiquant un état de défaillance.

11. Système de traitement selon la revendication 1 ou 2, comprenant en outre
une unité de commande d'axe optique (110) pouvant être mise en oeuvre pour changer un angle d'installation de l'unité de transmission de lumière (101) en se basant sur des informations sorties en provenance de l'unité de spécification de position (144).

12. Système de traitement selon la revendication 11, dans lequel
l'unité de commande d'axe optique (110) peut être mise en oeuvre pour sortir des informations indiquant un état de défaillance, quand un angle d'installation de l'unité de transmission de lumière à changer en se basant sur les informations sorties en provenance de l'unité de spécification de position (144) dépasse une plage variable.

13. Système de traitement selon la revendication 11 ou 12, dans lequel
l'unité de détermination d'état anormal (146) peut être mise en oeuvre pour sortir des informations indiquant une défaillance, quand l'intensité de lumière de réception de la lumière de signal au niveau de l'unité de réception de lumière (102) est hors d'une plage prédéterminée quand une direction d'installation de l'unité de transmission de lumière est changée par l'unité de commande d'axe optique.

14. Système de traitement selon la revendication 1 ou 2, dans lequel
l'unité de traitement d'intensité de lumière de réception (140) peut être mise en oeuvre pour sortir des informations indiquant un état de défaillance, quand l'intensité de lumière de réception de la lumière de signal au niveau de l'unité de réception de lumière (102) est hors d'une plage prédéterminée quand la direction de transmission de la lumière de référence est changée par l'unité de commande de lumière de référence.

15. Système de traitement selon la revendication 1 ou 2, dans lequel
l'unité de commande de lumière de référence (104) peut être mise en oeuvre pour changer la direction de transmission de la lumière de référence de sorte qu'une surface sur laquelle la lumière de référence est irradiée est balayée de façon unidimensionnelle ou bidimensionnelle avec la lumière de référence, et
l'unité de traitement d'intensité de lumière de réception (140) peut être mise en oeuvre pour effectuer un processus prédéterminé en se basant sur une direction de transmission de la lumière de référence quand l'intensité de lumière de réception du signal de référence au niveau de l'unité de réception de lumière (102) devient une valeur maximale.

16. Système de traitement selon la revendication 1 ou 2, dans lequel
l'unité de commande de lumière de référence (104) inclut un réflecteur pouvant être tourné qui est supporté de manière à pouvoir tourner librement et qui peut être mis en oeuvre pour réfléchir la lumière de référence émise en provenance de l'unité d'émission de lumière, et une unité de commande d'angle de réflexion pouvant être mise en oeuvre pour commander la rotation du réflecteur pouvant être tourné.

17. Système de traitement selon la revendication 15, dans lequel
l'unité de commande de lumière de référence est un dispositif à micromiroir.

18. Système de traitement selon la revendication 1 ou 2, dans lequel
l'unité de transmission de lumière sert également d'unité d'émission de lumière.
